(19) Europäisches Patentamt
European Patent Office
Office européen des brevets

(11) **EP 4 583 447 A1**

(12) **EUROPEAN PATENT APPLICATION**
published in accordance with Art. 153(4) EPC

(43) Date of publication:
**09.07.2025 Bulletin 2025/28**

(21) Application number: **23867372.7**

(22) Date of filing: **13.09.2023**

(51) International Patent Classification (IPC):
**H04L 5/00** *(2006.01)*    **H04W 64/00** *(2009.01)*

(52) Cooperative Patent Classification (CPC):
**H04L 5/00; H04W 64/00**

(86) International application number:
**PCT/CN2023/118645**

(87) International publication number:
**WO 2024/061083 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.09.2022  CN 202211160367
30.09.2022  CN 202211216478**

(71) Applicant: **Huawei Technologies Co., Ltd.
Shenzhen, Guangdong 518129 (CN)**

(72) Inventors:
• **LI, Chao
  Shenzhen, Guangdong 518129 (CN)**
• **LI, Jun
  Shenzhen, Guangdong 518129 (CN)**

(74) Representative: **Maiwald GmbH
Engineering
Elisenhof
Elisenstrasse 3
80335 München (DE)**

(54) **INFORMATION TRANSMISSION METHOD AND APPARATUS**

(57)    This application relates to the field of wireless communication technologies, and provides an information transmission method and an apparatus, to improve a possibility of successful sidelink positioning and improve sidelink positioning precision. In the method, a first device indicates, to a second device by using first information, a first resource for sending a first PRS, and the first device indicates, to the second device by using second information, whether a second resource exists and/or whether a third resource exists. In this way, when the second information indicates that the second resource does not exist and/or the third resource does not exist, the second device does not need to receive or blindly detect the PRS, and when the second information indicates that the second resource exists and/or the third resource exists, the second device sends the PRS or receives the PRS on a corresponding resource, thereby improving the possibility of successful sidelink positioning.

[FIG. 11]

EP 4 583 447 A1

**Description**

CROSS-REFERENCE TO RELATED APPLICATIONS

This application claims priority to Chinese Patent Application No. 202211160367.0, filed with the China National Intellectual Property Administration on September 22, 2022 and entitled "SIDELINK POSITIONING METHOD", and to Chinese Patent Application No. 202211216478.9, filed with the China National Intellectual Property Administration on September 30, 2022 and entitled "INFORMATION TRANSMISSION METHOD AND APPARATUS", both of which are incorporated herein by reference in their entireties.

TECHNICAL FIELD

This application relates to the field of wireless communication technologies, and in particular, to an information transmission method and an apparatus.

BACKGROUND

In daily life and applications, position information becomes increasingly important basic information. When a user is in an outdoor environment, a satellite can provide position information identified by a device. When the user is in an indoor environment, it is more difficult to obtain an accurate position of the device. For example, in an area such as home entertainment, telemedicine, online learning and education, an indoor shopping mall, an indoor parking lot, or a tunnel, people have a strong demand for accurate position information. However, due to signal blockage and other factors, a satellite-based positioning technology and a cellular base station-based positioning technology cannot meet an actual application requirement. In addition, even in an outdoor scenario, precision of a current civil satellite is generally within a range of 5 meters to 10 meters. In a scenario where high-precision positioning is required, for example, during autonomous driving, the current satellite cannot meet an actual application requirement in the outdoor scenario.

To meet the requirements of the foregoing application scenarios, sidelink positioning between devices has attracted increasing attention. Currently, in sidelink communication, it is important to indicate a resource for transmitting data by user equipment (user equipment, UE), to reduce sidelink positioning failures or improve sidelink positioning precision.

SUMMARY

This application provides an information transmission method and an apparatus, to indicate a resource for transmitting data by user equipment, thereby improving a possibility of successful sidelink positioning or improving sidelink positioning precision.

According to a first aspect, an information transmission method is provided. The method may be performed by a first device or a chip/chip system. In the method, the first device sends first information and second information to a second device. The first information indicates a first resource for sending a first positioning reference signal (positioning reference signal, PRS), and the second information indicates whether a second resource exists and/or the second information indicates whether a third resource exists. The second resource is used by the first device to send a second PRS, and the third resource is used by the second device to send a third PRS. The first device sends the first PRS to the second device on the first resource, where the first PRS is used for sidelink positioning.

Based on this solution, the first device indicates, to the second device by using the second information, whether the second resource exists and/or whether the third resource exists. In this way, when the second information indicates that the second resource does not exist and/or the third resource does not exist, the second device does not need to receive or blindly detect the PRS, and when the second information indicates that the second resource exists and/or the third resource exists, the second device receives the PRS on a corresponding resource. Explicitly indicating a resource (including whether a resource exists) for data transmission of user equipment can improve a possibility of successful sidelink positioning, and also help improve sidelink positioning precision.

In a possible implementation, when the second information indicates that the second resource exists, the first device sends the second PRS to the second device on the second resource.

In a possible implementation, when the second information indicates that the third resource exists, the first device receives the third PRS from the second device on the third resource.

In a possible implementation, the first information and the second information are carried in same signaling.

Based on this solution, the first information and the second information are carried in the same signaling. In this way, a sidelink positioning delay caused by different signaling indicating the resources for sending the PRSs can be reduced.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the second device to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources. Based on this solution, the first device indicates the quantity of second resources to the second device, to save air interface resources.

In a possible implementation, the indication information of the second resource includes a time domain range of the second resource. Based on this solution, the first device indicates the time domain range of the second resource to the second device. In this way, blind detection complexity of the second device can be reduced when signaling overheads are reduced.

In a possible implementation, the indication information of the second resource includes information about a time domain resource occupied in the second resource and/or information about a frequency domain resource of the second resource. Based on this solution, the first device indicates the information about the time domain resource and/or the information about the frequency domain resource of the second resource to the second device, to reduce complexity of the second device.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the second information indicates that the second resource does not exist. Based on this solution, when the second information indicates that the second resource does not exist, the second device may not need to blindly detect the second PRS.

In a possible implementation, the indication information of the third resource includes a quantity of third resources. Based on this solution, the first device indicates the quantity of third resources to the second device, to save air interface resources.

In a possible implementation, the indication information of the third resource includes a time domain range of the third resource. Based on this solution, the first device indicates the time domain range of the third resource to the second device. In this way, when signaling overheads are reduced, blind detection complexity when the first device receives the third PRS can be reduced.

In a possible implementation, the time domain range of the third resource indicates the second device to determine the third resource in the time domain range.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource.

In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the first device and the second device are terminal devices, and the first information and/or the second information are/is indicated by a network device.

In a possible implementation, the first information and/or the second information are/is carried in sidelink control information SCI or a media access control MAC control element CE.

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the first device; an identifier or a destination identifier of the second device; and an intra-group identifier of at least one second device.

In a possible implementation, the second resource and/or the third resource and the first resource include an initial transmission resource and at least one retransmission resource.

In a possible implementation, the first device sends synchronization information to the second device. The synchronization information indicates a type and/or an identifier of a synchronization source. The type of the synchronization source includes one of the following: a satellite, a network device, or a terminal device. The synchronization information is used by the second device to generate a positioning measurement report. Based on this solution, the first device may indicate related information of the synchronization source to the second device. When a synchronization source of the second device is the same as the synchronization source of the first device, the second device can measure the PRS sent by the first device or send the PRS to the first device. In this way, a timing offset can be reduced, and sidelink positioning precision can be improved.

In a possible implementation, the first device receives the positioning measurement report from the second device, where a type and/or an identifier of the synchronization source of the second device are/is the same as the type and/or the identifier indicated by the synchronization information.

In a possible implementation, the positioning measurement report includes at least one of the following information: the identifier of the first device; the identifier of the second device; an identifier of a positioning reference signal resource; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source. Based on this solution, when selecting a device whose type of a synchronization source is the terminal device, the first device and the second device can select devices that have synchronization sources with a same hop count, thereby avoiding a timing offset caused by selection of devices with different hop counts.

In a possible implementation, when the type of the synchronization source includes a network device, the synchronization information further includes an operator identifier of the network device. Based on this solution, because networks of different operators may not be synchronized, network devices of a same operator may be selected, based on information indicating the operator, as synchronization sources of a target device and an anchor device that participate in positioning, thereby avoiding an additional timing offset caused by selection of different operators.

In a possible implementation, the first device obtains configuration information of an operator identifier list of the network device. The first device sends an operator identifier index to the second device, where the operator identifier index corresponds to an index in the operator identifier list.

In a possible implementation, when the type of the synchronization source includes a network device, the synchronization information further includes an identifier of a physical cell managed by the network device. Based on this solution, because networks of a same operator are synchronized to different network devices, and there may still be a large timing offset, for example, network devices are not synchronized, or timing offset (TA) values are different, a same network device of a same operator may be selected as the synchronization sources of the target device and the anchor device that participate in positioning, thereby avoiding an additional timing offset caused by selection of different network devices of different operators.

In a possible implementation, the synchronization information indicates information about the synchronization source of the first device, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or a positioning measurement report.

According to a second aspect, an information transmission method is provided. The method may be performed by a second device or a chip/chip system. In the method, the second device receives first information and second information from a first device. The first information indicates a first resource for sending a first positioning reference signal PRS, and the second information indicates whether a second resource exists and/or the second information indicates whether a third resource exists. The second resource is used by the first device to send a second PRS, and the third resource is used by the second device to send a third PRS. The second device receives the first PRS from the first device on the first resource, where the first PRS is used for sidelink positioning.

In a possible implementation, when the second information indicates that the second resource exists, the second device receives the second PRS from the first device on the second resource.

In a possible implementation, when the second information indicates that the third resource exists, the second device sends the third PRS on the third resource.

In a possible implementation, the first information and the second information are carried in same signaling.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the second device to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources.

In a possible implementation, the indication information of the second resource includes a time domain range of the second resource.

In a possible implementation, the indication information of the second resource includes information about a time domain resource occupied in the second resource and/or information about a frequency domain resource of the second resource.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the indication information of the third resource includes a quantity of third resources.

In a possible implementation, the indication information of the third resource includes a time domain range of the third resource.

In a possible implementation, the second device determines the third resource in the time domain resource range of the third resource.

In a possible implementation, the second device determines the third resource in the time domain range of the third resource based on a priority of the second PRS and/or a priority of the third PRS and a priority of the first PRS. The priority of the second PRS and/or the priority of the third PRS are/is carried in the second information, and the priority of the first PRS is carried in the first information.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource.

In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the first information and/or the second information are/is carried in sidelink control information (sidelink control information, SCI) or a media access control (media access control, MAC) control element (control element, CE).

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the first device; an identifier or a destination identifier of the second device; and an intra-group identifier of at least one second device.

In a possible implementation, the second resource and/or the third resource and the first resource include an initial transmission resource and at least one retransmission resource.

In a possible implementation, the second device receives synchronization information from the first device, where the synchronization information indicates a type and/or an identifier of a synchronization source. The type of the synchronization source includes one of the following: a satellite, a network device, or a terminal device. The second device generates a positioning measurement report based on the synchronization information.

In a possible implementation, when a type and/or an identifier of a synchronization source of the second device are/is the same as the type and/or the identifier of the synchronization source indicated by the synchronization information, the second device measures the first PRS. The second device generates the positioning measurement report based on a measurement result of the first PRS obtained by measuring the first PRS.

In a possible implementation, the second device sends the positioning measurement report to the first device.

In a possible implementation, the positioning measurement report includes at least one of the following information: the identifier of the first device; the identifier of the second device; an identifier of a positioning reference signal resource; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, when the type of the synchronization source includes a network device, the synchronization information further includes an operator identifier of the network device.

In a possible implementation, when the type of the synchronization source includes a network device, the synchronization information further includes an identifier of a physical cell managed by the network device.

In a possible implementation, the synchronization information indicates information about the synchronization source of the first device, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or a positioning measurement report.

In a possible implementation, the second device determines a candidate resource based on the second resource and/or the third resource and the first resource. Based on this solution, the second device can determine, based on the second resource and/or the third resource and the first resource indicated by the first device, a resource for sending the third PRS, and can exclude, on the basis of excluding used resources, a resource reserved by the first device for next transmission or for another device, thereby reducing a possibility of a resource conflict.

In a possible implementation, when a signal strength of the first PRS is higher than a first threshold, the second device excludes the second resource and/or the third resource and the first resource in a selection window. The selection window is after the sensing window. Based on this solution, when the signal strength of the first PRS is higher than the first threshold, the second device performs resource selection. This can avoid excluding a resource with less interference, and reduce a waste of resources.

In a possible implementation, when the second information indicates the second resource, the candidate resource is a resource excluding the second resource and a reserved resource corresponding to the first resource in the selection window; or when the second information indicates the third resource, a third device excludes the third resource and the first resource in the selection window; or when the second information indicates the second resource and the third resource, the third device excludes the second resource, the third resource, and the first resource in the selection window.

In a possible implementation, the second device excludes a reserved resource corresponding to the first resource in the selection window.

In a possible implementation, the second device excludes a reserved resource corresponding to the second resource in the selection window.

In a possible implementation, the second device excludes a reserved resource corresponding to the third resource in the selection window.

In a possible implementation, when the second information indicates the time domain range of the second resource, the candidate resource is a resource excluding, in the selection window, a resource in the time domain range of the second resource and a reserved resource corresponding to the first resource.

In a possible implementation, the second device sends the third PRS on the candidate resource.

For beneficial effect of the possible implementations of the second aspect, refer to beneficial effect of the possible implementations of the first aspect.

According to a third aspect, an information transmission method is provided. The method may be performed by a first device or a chip/chip system. In the method, the first device determines synchronization information based on a synchronization source of the first device. The synchronization information indicates a type and/or an identifier of the synchronization source. The type of the synchronization source includes one of the following: a satellite, a network device, or a terminal device. The first device sends the synchronization information to a second device, where the synchronization information is used by the second device to generate a positioning measurement report.

Based on this solution, the first device may indicate related information of the synchronization source to the second device. When a synchronization source of the second device is the same as the synchronization source of the first device, the second device can measure the PRS sent by the first device or send the PRS to the first device. In this way, a timing offset can be reduced, and sidelink positioning precision can be improved.

In a possible implementation, the first device receives the positioning measurement report from the second device, where a type and/or an identifier of the synchronization source of the second device are/is the same as the type and/or the identifier of the synchronization source of the first device.

In a possible implementation, the positioning measurement report includes at least one of the following information: the synchronization information; an identifier or a source identifier of the first device; an identifier or a destination identifier of the second device; an identifier of a positioning reference signal resource; a subframe number in which the positioning reference signal resource is located; a slot number in which the positioning reference signal resource is located; an index of a resource pool in which the positioning reference signal resource is located; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source. Based on this solution, when selecting a device whose type of a synchronization source is the terminal device, the first device and the second device can select devices that have synchronization sources with a same hop count, thereby avoiding a timing offset caused by selection of devices with different hop counts.

In a possible implementation, the type of the synchronization source includes a network device, and the synchronization information further includes an operator identifier of the network device. Based on this solution, because networks of different operators may not be synchronized, network devices of a same operator may be selected, based on information indicating the operator, as synchronization sources of a target device and an anchor device that participate in positioning, thereby avoiding an additional timing offset caused by selection of different operators.

In a possible implementation, the first device obtains configuration information of an operator identifier list of the network device. The first device sends an operator identifier index to the second device, where the operator identifier index corresponds to an index in the operator identifier list.

In a possible implementation, the type of the synchronization source includes a network device, and the synchronization information further includes an identifier of a physical cell managed by the network device. Based on this solution, because networks of a same operator are synchronized to different network devices, and there may still be a large timing offset, for example, network devices are not synchronized, or timing offset (TA) values are different, a same network device of a same operator may be selected as synchronization sources of a target device and an anchor device that participate in positioning, thereby avoiding an additional timing offset caused by selection of different network devices of different operators.

In a possible implementation, the synchronization information indicates information about the synchronization source of the first device, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or a positioning measurement report.

According to a fourth aspect, an information transmission method is provided. The method may be performed by a second device or a chip/chip system. In the method, the second device receives synchronization information from a first device. The synchronization information indicates a type and/or an identifier of a synchronization source. The type of the synchronization source includes one of the following: a satellite, a network device, or a terminal device. The second device generates a positioning measurement report based on the synchronization information.

In a possible implementation, when a type and/or an identifier of a synchronization source of the second device are/is the same as the type and/or the identifier indicated by the synchronization information, the second device measures a positioning reference signal sent by the first device. The second device generates the positioning measurement report based on a measurement result obtained by measuring the positioning reference signal.

In a possible implementation, the second device sends the positioning measurement report to the first device.

In a possible implementation, the positioning measurement report further includes at least one of the following information: the synchronization information; an identifier or a source identifier of the first device; an identifier or a destination identifier of the second device; an identifier of a positioning reference signal resource; a subframe number in which the positioning reference signal resource is located; a slot number in which the positioning reference signal resource is located; an index of a resource pool in which the positioning reference signal resource is located; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, the type of the synchronization source includes a network device, and the synchronization information further includes an operator identifier of the network device.

In a possible implementation, the type of the synchronization source includes a network device, and the synchronization information further includes an identifier of a physical cell managed by the network device.

In a possible implementation, the synchronization information indicates information about the synchronization source of the first device, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or the positioning measurement report.

For beneficial effect of the possible implementations of the fourth aspect, refer to beneficial effect of the possible implementations of the third aspect.

According to a fifth aspect, an information transmission method is provided. The method may be performed by a third device or a chip/chip system. In the method, the third device receives, in a sensing window, first information and second information that are sent by a first device. The first information indicates a first resource for sending a first positioning reference signal PRS by the first device, the second information indicates a second resource for sending a second PRS by the first device, and/or the second information indicates a third resource for sending a third PRS by a second device. The third device determines a candidate resource based on the second resource and/or the third resource and the first resource.

Based on this solution, during resource selection, the third device may exclude resources reserved by the first device for the first device and the second device, that is, the third device may exclude a resource that is not used but has been reserved. Therefore, a possibility of a resource conflict can be reduced, and reliability of sent data can be improved.

In a possible implementation, when a signal strength of the first PRS is higher than a first threshold, the third device excludes the second resource and/or the third resource and the first resource in a selection window. The selection window is after the sensing window.

Based on this solution, when the signal strength of the first PRS is higher than the first threshold, the third device excludes the second resource and/or the third resource and the first resource in the selection window. This can reduce a case in which a resource with less interference is excluded and avoid a waste of resources.

In a possible implementation, when the second information indicates the second resource, the candidate resource is a resource excluding the second resource and a reserved resource corresponding to the first resource in the selection window; or when the second information indicates the third resource, the third device excludes the third resource and the first resource in the selection window; or when the second information indicates the second resource and the third resource, the third device excludes the second resource, the third resource, and the first resource in the selection window.

In a possible implementation, the third device excludes a reserved resource corresponding to the second resource in the selection window. Based on this solution, the third device may further exclude the reserved resource corresponding to the second resource. This can effectively reduce a possibility of resource collision.

In a possible implementation, the third device excludes a reserved resource corresponding to the third resource in the selection window. Based on this solution, the third device may further exclude the reserved resource corresponding to the third resource. This can effectively reduce a possibility of resource collision.

In a possible implementation, when the second information indicates a time domain range of the second resource, the candidate resource is a resource excluding, in the selection window, a resource in the time domain range of the second resource and a reserved resource corresponding to the first resource; and/or when the second information indicates a time domain range of the third resource, the candidate resource is a resource excluding, in the selection window, a resource in the time domain range of the third resource and a reserved resource corresponding to the first resource. Based on this solution, the third device may exclude the time domain range of the second resource and/or the time domain range of the third resource. This can effectively reduce a possibility of resource collision.

In a possible implementation, the third device receives first signaling. The first signaling indicates to exclude the second resource and/or the third resource. The third device determines, based on the first signaling, to exclude the second resource and/or the third resource in the selection window. Based on this solution, the third device performs resource exclusion based on the first signaling. This can reduce a possibility that the second resource and/or the third resource are/is incorrectly excluded.

In a possible implementation, time domain positions/a time domain position of the second resource and/or the third resource are/is after a time domain position of the first resource.

According to a sixth aspect, an information transmission method is provided. The method may be performed by a network device or a chip/chip system. In the method, the network device determines third information and fourth information, where the third information indicates a fourth resource for sending a first sidelink positioning reference signal (sidelink PRS, SL-PRS) by a first device, and the fourth information indicates a fifth resource and/or the fourth information indicates a sixth resource. The fifth resource is used by the first device to send a second SL-PRS, and the sixth resource is used by a second device to send a third SL-PRS. The network device sends the third information and the fourth information to the first device.

Based on the foregoing solution, the network device indicates the sidelink positioning resource used by the first device and/or the sidelink positioning resource used by the second device. Therefore, when a network is available, sidelink positioning resources can be allocated to different devices based on a network deployment requirement, thereby maximizing network resource allocation and utilization efficiency, and improving system and network performance.

In a possible implementation, the third information includes one or more of the following: a sequence parameter of the first SL-PRS, time domain resource information of the fourth resource, and frequency domain resource information of the fourth resource.

In a possible implementation, the third information includes information about a time-frequency resource of a PSCCH for carrying the first SL-PRS.

In a possible implementation, the fourth information includes first indication information, the first indication information indicates that the fifth resource exists, and/or the fourth information includes second indication information, and the second indication information indicates that the sixth resource exists. Based on this solution, the first indication information and the second indication information indicate whether the fifth resource and the sixth resource exist. When the fifth resource and the sixth resource exist, the first device can perform sidelink positioning based on the fifth resource and the sixth resource.

In a possible implementation, the fourth information includes information about the fifth resource; and/or the fourth information includes information about the sixth resource.

In a possible implementation, the information about the fifth resource includes a quantity of fifth resources. Based on this solution, the network device indicates the quantity of fifth resources to the first device, to save air interface resources.

In a possible implementation, the information about the fifth resource includes a time domain resource of the fifth resource and/or a frequency domain resource of the fifth resource. Based on this solution, the network device indicates the time domain resource and/or the frequency domain resource of the fifth resource to the first device. In this way, the first device can determine a position of the fifth resource, and determine, based on the fifth resource, a resource used for sidelink positioning.

In a possible implementation, the information about the sixth resource includes a quantity of sixth resources. Based on this solution, the network device indicates the quantity of sixth resources to the first device, to save air interface resources.

In a possible implementation, the information about the sixth resource includes a time domain resource of the sixth resource and/or a frequency domain resource of the sixth resource. Based on this solution, the network device indicates the time domain resource and/or the frequency domain resource of the sixth resource to the first device. In this way, the first device can determine a position of the sixth resource, and determine, based on the sixth resource, a resource used for sidelink positioning.

In a possible implementation, the network device sends fifth information, where the fifth information indicates a seventh resource, and the seventh resource is an unavailable resource. Based on this solution, the network device indicates, to the first device, an unavailable resource, that is, indicates a resource that cannot be used for transmission. It is equivalent to performing an interference avoidance operation, and the first device can free up the resource and does not use it for transmission, thereby reducing interference between positioning resources between users.

In a possible implementation, the network device indicates the third information and the fourth information to the first device by using downlink control information (downlink control information, DCI). Based on this solution, the network device indicates the third information and the fourth information to the first device by using the downlink control information. This can reduce a delay caused by indicating the third information and the fourth information by using different signaling.

In a possible implementation, cyclic redundancy check (cyclic redundancy check, CRC) of the DCI is scrambled by using a sidelink positioning-related RNTI. Based on this solution, scrambling the DCI by using the RNTI can improve security of the third information and the fourth information.

According to a seventh aspect, an information transmission method is provided. The method may be performed by a first device and a chip/chip system. In the method, the first device receives third information and fourth information from a network device. The third information indicates a fourth resource for sending a first sidelink positioning reference signal SL-PRS by the first device, and the fourth information indicates a fifth resource and/or the fourth information indicates a sixth resource. The fifth resource is used by the first device to send a second SL-PRS, and the sixth resource is used by a second device to send a third SL-PRS. The first device sends the second PRS to the second device and/or receives the third PRS and sends the first PRS based on the third information and the fourth information.

In a possible implementation, the third information includes one or more of the following: a sequence parameter of the first PRS, time domain resource information of the fourth resource, and frequency domain resource information of the fourth resource.

In a possible implementation, the third information includes information about a time-frequency resource of a PSCCH for carrying the first PRS.

In a possible implementation, the fourth information includes first indication information, the first indication information indicates that the fifth resource exists, and/or the fourth information includes second indication information, and the second indication information indicates that the sixth resource exists.

In a possible implementation, the fourth information includes information about the fifth resource; and/or the fourth information includes information about the sixth resource.

In a possible implementation, the information about the fifth resource includes a quantity of fifth resources.

In a possible implementation, the information about the fifth resource includes a time domain resource occupied in the fifth resource and/or a frequency domain resource of the fifth resource.

In a possible implementation, the information about the sixth resource includes a quantity of sixth resources.

In a possible implementation, the information about the sixth resource includes a time domain resource of the sixth resource and/or a frequency domain resource of the sixth resource.

In a possible implementation, the first device receives fifth information, where the fifth information indicates a seventh resource, and the seventh resource is an unavailable resource.

In a possible implementation, the first device sends first information to the second device based on the third information. The first device sends second information to the second device based on the fourth information. The first information indicates a first resource for sending a first positioning reference signal PRS, and the second information indicates whether a second resource exists and/or the second information indicates whether a third resource exists. The second resource is used by the first device to send the second PRS, and the third resource is used by the second device to send the third PRS. The first device sends the first PRS to the second device on the first resource, where the first PRS is used for sidelink positioning.

In a possible implementation, when the second information indicates that the second resource exists, the first device sends the second PRS to the second device on the second resource.

In a possible implementation, when the second information indicates that the third resource exists, the first device receives the third PRS from the second device on the third resource.

In a possible implementation, the first information and the second information are carried in same signaling.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the second device to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources.

In a possible implementation, the indication information of the second resource includes a time domain range of the second resource.

In a possible implementation, the indication information of the second resource includes information about a time domain resource occupied in the second resource and/or information about a frequency domain resource of the second resource.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the second information indicates that the second resource does not exist.

In a possible implementation, the indication information of the third resource includes a quantity of third resources.

In a possible implementation, the indication information of the third resource includes a time domain range of the third resource.

In a possible implementation, the time domain range of the third resource indicates the second device to determine the third resource in the time domain range.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource. In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the first device and the second device are terminal devices, and the first information and/or the second information are/is indicated by a network device.

In a possible implementation, the first information and/or the second information are/is carried in sidelink control information SCI or a media access control MAC control element CE.

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the first device; an identifier or a destination identifier of the second device; and an intra-group identifier of at least one second device.

In a possible implementation, the second resource and/or the third resource and the first resource include an initial transmission resource and at least one retransmission resource.

For beneficial effect of the possible implementations of the seventh aspect, refer to beneficial effect of the possible implementations of the sixth aspect and the first aspect.

According to an eighth aspect, a communication apparatus is provided, and includes a processing unit and a transceiver unit.

The processing unit is configured to determine first information and second information. The transceiver unit is configured to send the first information and the second information to a second device. The first information indicates a first resource for sending a first positioning reference signal PRS, and the second information indicates whether a second resource exists and/or the second information indicates whether a third resource exists. The second resource is used by the communication apparatus to send a second PRS, and the third resource is used by the second device to send a third PRS. The transceiver unit is further configured to send the first PRS to the second device on the first resource, where the first PRS is used for sidelink positioning.

In a possible implementation, when the second information indicates that the second resource exists, the transceiver unit is further configured to send the second PRS to the second device on the second resource.

In a possible implementation, when the second information indicates that the third resource exists, the transceiver unit is further configured to receive the third PRS from the second device on the third resource.

In a possible implementation, the first information and the second information are carried in same signaling.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the second device to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources.

In a possible implementation, the indication information of the second resource includes a time domain range of the second resource.

In a possible implementation, the indication information of the second resource includes information about a time domain resource occupied in the second resource and/or information about a frequency domain resource of the second resource.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the second information indicates that the second resource does not exist.

In a possible implementation, the indication information of the third resource includes a quantity of third resources.

In a possible implementation, the indication information of the third resource includes a time domain range of the third resource.

In a possible implementation, the time domain range of the third resource indicates the second device to determine the third resource in the time domain range.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource.

In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the communication apparatus and the second device are terminal devices, and the first information and/or the second information are/is indicated by a network device.

In a possible implementation, the first information and/or the second information are/is carried in sidelink control information SCI or a media access control MAC control element CE.

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the communication apparatus; an identifier or a destination identifier of the second device; and an intra-group identifier of at least one second device.

In a possible implementation, the second resource and/or the third resource and the first resource include an initial transmission resource and at least one retransmission resource.

In a possible implementation, the transceiver unit is further configured to send synchronization information to the second device. The synchronization information indicates a type and/or an identifier of a synchronization source. The type of the synchronization source includes one of the following: a satellite, a network device, or a terminal device. The synchronization information is used by the second device to generate a positioning measurement report.

In a possible implementation, the transceiver unit is further configured to receive the positioning measurement report from the second device, where a type and/or an identifier of a synchronization source of the second device are/is the same as the type and/or the identifier indicated by the synchronization information.

In a possible implementation, the positioning measurement report includes at least one of the following information: the identifier of the communication apparatus; the identifier of the second device; an identifier of a positioning reference signal resource; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, when the type of the synchronization source includes a network device, the synchronization information further includes an operator identifier of the network device.

In a possible implementation, the processing unit is further configured to obtain configuration information of an operator identifier list of the network device. The transceiver unit is specifically configured to send an operator identifier index to the second device, where the operator identifier index corresponds to an index in the operator identifier list.

In a possible implementation, when the type of the synchronization source includes a network device, the synchronization information further includes an identifier of a physical cell managed by the network device.

In a possible implementation, the synchronization information indicates information about the synchronization source of the communication apparatus, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or the positioning measurement report.

According to a ninth aspect, a communication apparatus is provided, and includes a processing unit and a transceiver unit.

The transceiver unit is configured to receive first information and second information from a first device. The first information indicates a first resource for sending a first positioning reference signal PRS, and the second information indicates whether a second resource exists and/or the second information indicates whether a third resource exists. The second resource is used by the first device to send a second PRS, and the third resource is used by the communication apparatus to send a third PRS. The processing unit is configured to determine the first resource. The transceiver unit is further configured to receive the first PRS from the first device on the first resource, where the first PRS is used for sidelink positioning.

In a possible implementation, when the second information indicates that the second resource exists, the transceiver unit is further configured to receive the second PRS from the first device on the second resource.

In a possible implementation, when the second information indicates that the third resource exists, the transceiver unit is further configured to receive the third PRS from the communication apparatus on the third resource.

In a possible implementation, the first information and the second information are carried in same signaling.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the communication apparatus to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources.

In a possible implementation, the indication information of the second resource includes a time domain range of the second resource.

In a possible implementation, the indication information of the second resource includes information about a time domain resource occupied in the second resource and/or information about a frequency domain resource of the second resource.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the indication information of the third resource includes a quantity of third resources.

In a possible implementation, the indication information of the third resource includes a time domain range of the third resource.

In a possible implementation, the communication apparatus determines the third resource in the time domain resource range of the third resource.

In a possible implementation, the communication apparatus determines the third resource in the time domain range of the third resource based on a priority of the second PRS and/or a priority of the third PRS and a priority of the first PRS. The priority of the second PRS and/or the priority of the third PRS are/is carried in the second information, and the priority of the first PRS is carried in the first information.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource.

In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the first information and/or the second information are/is carried in sidelink control information SCI or a media access control MAC control element CE.

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the first device; an identifier or a destination identifier of the communication apparatus; and an intra-group identifier of at least one communication apparatus.

In a possible implementation, the second resource and/or the third resource and the first resource include an initial transmission resource and at least one retransmission resource.

In a possible implementation, the transceiver unit is further configured to receive synchronization information from the first device, where the synchronization information indicates a type and/or an identifier of a synchronization source. The type of the synchronization source includes one of the following: a satellite, a network device, or a terminal device. The communication apparatus generates a positioning measurement report based on the synchronization information.

In a possible implementation, when a type and/or an identifier of a synchronization source of the communication apparatus are/is the same as the type and/or the identifier of the synchronization source indicated by the synchronization information, the processing unit is further configured to measure the first PRS. The processing unit is further configured to generate the positioning measurement report based on a measurement result of the first PRS obtained by measuring the first PRS.

In a possible implementation, the transceiver unit is further configured to send the positioning measurement report to the first device.

In a possible implementation, the positioning measurement report includes at least one of the following information: the identifier of the first device; the identifier of the communication apparatus; an identifier of a positioning reference signal resource; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, when the type of the synchronization source includes a network device, the synchronization information further includes an operator identifier of the network device.

In a possible implementation, when the type of the synchronization source includes a network device, the synchronization information further includes an identifier of a physical cell managed by the network device.

In a possible implementation, the synchronization information indicates information about the synchronization source of the first device, or the synchronization information indicates information about the synchronization source of the communication apparatus, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or the positioning measurement report.

In a possible implementation, the communication apparatus determines a candidate resource based on the second resource and/or the third resource and the first resource.

In a possible implementation, when a signal strength of the first PRS is higher than a first threshold, the processing unit is further configured to exclude the second resource and/or the third resource and the first resource in a selection window. The selection window is after a sensing window.

In a possible implementation, when the second information indicates the second resource, the candidate resource is a resource excluding the second resource and a reserved resource corresponding to the first resource in the selection window; or when the second information indicates the third resource, the third device excludes the third resource and the first resource in the selection window; or when the second information indicates the second resource and the third resource, the third device excludes the second resource, the third resource, and the first resource in the selection window.

In a possible implementation, the processing unit is further configured to exclude a reserved resource corresponding to the first resource in the selection window.

In a possible implementation, the processing unit is further configured to exclude a reserved resource corresponding to the second resource in the selection window.

In a possible implementation, the processing unit is further configured to exclude a reserved resource corresponding to the third resource in the selection window.

In a possible implementation, when the second information indicates a time domain range of the second resource, the candidate resource is a resource excluding, in the selection window, a resource in the time domain range of the second resource and a reserved resource corresponding to the first resource.

In a possible implementation, the transceiver unit is further configured to send the third PRS on the candidate resource.

According to a tenth aspect, a communication apparatus is provided, and includes a processing unit and a transceiver unit.

The processing unit is configured to determine synchronization information based on a synchronization source of the communication apparatus. The synchronization information indicates a type and/or an identifier of the synchronization source. The type of the synchronization source includes one of the following: a satellite, a network device, or a terminal device. The transceiver unit is configured to send the synchronization information to a second device, where the synchronization information is used by the second device to generate a positioning measurement report.

In a possible implementation, the transceiver unit is further configured to receive the positioning measurement report from the second device, where a type and/or an identifier of a synchronization source of the second device are/is the same as the type and/or the identifier of the synchronization source of the communication apparatus.

In a possible implementation, the positioning measurement report includes at least one of the following information: the synchronization information; an identifier or a source identifier of the communication apparatus; an identifier or a destination identifier of the second device; an identifier of a positioning reference signal resource; a subframe number in which the positioning reference signal resource is located; a slot number in which the positioning reference signal resource is located; an index of a resource pool in which the positioning reference signal resource is located; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, the type of the synchronization source includes a network device, and the synchronization information further includes an operator identifier of the network device.

In a possible implementation, the processing unit is further configured to obtain configuration information of an operator identifier list of the network device. The transceiver unit is specifically configured to send an operator identifier index to the second device, where the operator identifier index corresponds to an index in the operator identifier list.

In a possible implementation, the type of the synchronization source includes a network device, and the synchronization information further includes an identifier of a physical cell managed by the network device.

In a possible implementation, the synchronization information indicates information about the synchronization source of the communication apparatus, or the synchronization information indicates information about the synchronization source of the second device, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or the positioning measurement report.

According to an eleventh aspect, a communication apparatus is provided, and includes a processing unit and a transceiver unit.

The transceiver unit is configured to receive synchronization information from a first device. The synchronization information indicates a type and/or an identifier of a synchronization source. The type of the synchronization source includes one of the following: a satellite, a network device, or a terminal device. The processing unit is configured to generate a positioning measurement report based on the synchronization information.

In a possible implementation, when a type and/or an identifier of a synchronization source of the communication apparatus are/is the same as the type and/or the identifier indicated by the synchronization information, the processing unit is further configured to measure a positioning reference signal sent by the first device. The processing unit is specifically configured to generate the positioning measurement report based on a measurement result obtained by measuring the positioning reference signal.

In a possible implementation, the transceiver unit is further configured to send the positioning measurement report to the first device.

In a possible implementation, the positioning measurement report further includes at least one of the following information: the synchronization information; an identifier or a source identifier of the first device; an identifier or a destination identifier of the communication apparatus; an identifier of a positioning reference signal resource; a subframe number in which the positioning reference signal resource is located; a slot number in which the positioning reference signal resource is located; an index of a resource pool in which the positioning reference signal resource is located; indication information of a positioning measurement result; indication information of a timestamp; and indication information of the type and/or the identifier of the synchronization source.

In a possible implementation, the synchronization information further includes hop count indication information, and the hop count indication information indicates a hop count during synchronization to the synchronization source.

In a possible implementation, the type of the synchronization source includes a network device, and the synchronization information further includes an operator identifier of the network device.

In a possible implementation, the type of the synchronization source includes a network device, and the synchronization information further includes an identifier of a physical cell managed by the network device.

In a possible implementation, the synchronization information indicates information about the synchronization source of the first device, or the synchronization information indicates information about the synchronization source of the communication apparatus, or the synchronization information indicates information about a required synchronization source.

In a possible implementation, the synchronization information is carried in sidelink control information, a MAC CE, or PC5 RRC.

In a possible implementation, the synchronization information is carried in any one of the following messages: a positioning request message, a positioning assistance message, a positioning response message, or the positioning measurement report.

According to a twelfth aspect, a communication apparatus is provided, and includes a processing unit and a transceiver unit.

The transceiver unit is configured to receive, in a sensing window, first information and second information that are sent by a first device. The first information indicates a first resource for sending a first positioning reference signal PRS by the first device, the second information indicates a second resource for sending a second PRS by the first device, and/or the second information indicates a third resource for sending a third PRS by a second device. The processing unit is configured to determine a candidate resource based on the second resource and/or the third resource and the first resource.

In a possible implementation, when a signal strength of the first PRS is higher than a first threshold, the processing unit is specifically configured to exclude the second resource and/or the third resource and the first resource in a selection window. The selection window is after a sensing window.

In a possible implementation, when the second information indicates the second resource, the candidate resource is a resource excluding the second resource and a reserved resource corresponding to the first resource in the selection window; or when the second information indicates the third resource, a third device excludes the third resource and the first resource in the selection window; or when the second information indicates the second resource and the third resource, the third device excludes the second resource, the third resource, and the first resource in the selection window.

In a possible implementation, the processing unit is further configured to exclude a reserved resource corresponding to the second resource in the selection window.

In a possible implementation, the processing unit is further configured to exclude a reserved resource corresponding to the third resource in the selection window.

In a possible implementation, when the second information indicates a time domain range of the second resource, the candidate resource is a resource excluding, in the selection window, a resource in the time domain range of the second resource and a reserved resource corresponding to the first resource; and/or when the second information indicates a time domain range of the third resource, the candidate resource is a resource excluding, in the selection window, a resource in the time domain range of the third resource and a reserved resource corresponding to the first resource.

In a possible implementation, the transceiver unit is further configured to receive first signaling. The first signaling indicates to exclude the second resource and/or the third resource. The processing unit is further configured to determine, based on the first signaling, to exclude the second resource and/or the third resource in the selection window.

In a possible implementation, time domain positions/a time domain position of the second resource and/or the third resource are/is after a time domain position of the first resource.

According to a thirteenth aspect, a communication apparatus is provided, and includes a processing unit and a transceiver unit.

The processing unit is configured to determine third information and fourth information, where the third information indicates a fourth resource for sending a first sidelink positioning reference signal SL-PRS by a first device, and the fourth information indicates a fifth resource and/or the fourth information indicates a sixth resource. The fifth resource is used by the first device to send a second SL-PRS, and the sixth resource is used by a second device to send a third SL-PRS. The transceiver unit is configured to send the third information and the fourth information to the first device.

In a possible implementation, the third information includes one or more of the following: a sequence parameter of the first SL-PRS, time domain resource information of the fourth resource, and frequency domain resource information of the fourth resource.

In a possible implementation, the third information includes information about a time-frequency resource of a PSCCH for carrying the first SL-PRS.

In a possible implementation, the fourth information includes first indication information, the first indication information indicates that the fifth resource exists, and/or the fourth information includes second indication information, and the second indication information indicates that the sixth resource exists.

In a possible implementation, the fourth information includes information about the fifth resource; and/or the fourth information includes information about the sixth resource.

In a possible implementation, the information about the fifth resource includes a quantity of fifth resources.

In a possible implementation, the information about the fifth resource includes a time domain resource of the fifth resource and/or a frequency domain resource of the fifth resource.

In a possible implementation, the information about the sixth resource includes a quantity of sixth resources.

In a possible implementation, the information about the sixth resource includes a time domain resource of the sixth resource and/or a frequency domain resource of the sixth resource.

In a possible implementation, the transceiver unit is further configured to send fifth information, where the fifth information indicates a seventh resource, and the seventh resource is an unavailable resource.

In a possible implementation, the transceiver unit is further configured to indicate the third information and the fourth information to the first device by using downlink control information DCI.

In a possible implementation, CRC of the DCI is scrambled by using a sidelink positioning-related RNTI.

According to a fourteenth aspect, a communication apparatus is provided, and includes a processing unit and a transceiver unit.

The transceiver unit is configured to receive third information and fourth information from a network device. The third information indicates a fourth resource for sending a first sidelink positioning reference signal SL-PRS by the communication apparatus, and the fourth information indicates a fifth resource and/or the fourth information indicates a sixth resource. The fifth resource is used by the communication apparatus to send a second SL-PRS resource, and the sixth resource is used by a second device to send a third SL-PRS resource. The processing unit is configured to determine the fifth resource and/or the sixth resource and the fourth resource based on the third information and the fourth information. The transceiver unit is further configured to: send the second PRS to the second device and/or receive the third PRS and send the first PRS.

In a possible implementation, the third information includes one or more of the following: a sequence parameter of the first PRS, time domain resource information of the fourth resource, and frequency domain resource information of the fourth resource.

In a possible implementation, the third information includes information about a time-frequency resource of a PSCCH for carrying the first PRS.

In a possible implementation, the fourth information includes first indication information, the first indication information indicates that the fifth resource exists, and/or the fourth information includes second indication information, and the second indication information indicates that the sixth resource exists.

In a possible implementation, the fourth information includes information about the fifth resource; and/or the fourth information includes information about the sixth resource.

In a possible implementation, the information about the fifth resource includes a quantity of fifth resources.

In a possible implementation, the information about the fifth resource includes a time domain resource occupied in the fifth resource and/or a frequency domain resource of the fifth resource.

In a possible implementation, the information about the sixth resource includes a quantity of sixth resources.

In a possible implementation, the information about the sixth resource includes a time domain resource of the sixth resource and/or a frequency domain resource of the sixth resource.

In a possible implementation, the transceiver unit is further configured to receive fifth information, where the fifth information indicates a seventh resource, and the seventh resource is an unavailable resource.

In a possible implementation, the transceiver unit is further configured to send first information to the second device based on the third information. The transceiver unit is further configured to send second information to the second device based on the fourth information. The first information indicates a first resource for sending a first positioning reference signal PRS, and the second information indicates whether a second resource exists and/or the second information indicates whether a third resource exists. The second resource is used by the communication apparatus to send the second PRS, and the third resource is used by the second device to send the third PRS. The communication apparatus sends the first PRS to the second device on the first resource, where the first PRS is used for sidelink positioning.

In a possible implementation, when the second information indicates that the second resource exists, the transceiver unit is further configured to send the second PRS to the second device on the second resource.

In a possible implementation, when the second information indicates that the third resource exists, the transceiver unit is further configured to receive the third PRS from the second device on the third resource.

In a possible implementation, the first information and the second information are carried in same signaling.

In a possible implementation, the second PRS and/or the third PRS are/is located after the first PRS, and the second PRS and/or the third PRS and the first PRS are used for same sidelink positioning. Alternatively, the second PRS and/or the third PRS and the first PRS are used for generation of a same sidelink positioning measurement report.

In a possible implementation, the second PRS and/or the third PRS and the first PRS are located in a reservation period of the first PRS. The second PRS and/or the third PRS and the first PRS are a plurality of mutually associated sidelink positioning reference signals for completing one sidelink positioning.

In a possible implementation, the second information includes request information, and the request information indicates the second device to send the third PRS.

In a possible implementation, when the second information indicates that the second resource exists, the second information includes indication information of the second resource; and/or when the second information indicates that the third resource exists, the second information includes indication information of the third resource.

In a possible implementation, the indication information of the second resource includes a quantity of second resources.

In a possible implementation, the indication information of the second resource includes a time domain range of the second resource.

In a possible implementation, the indication information of the second resource includes information about a time domain resource occupied in the second resource and/or information about a frequency domain resource of the second resource.

In a possible implementation, the information about the frequency domain resource of the second resource includes a position of a resource element of the second PRS in frequency domain; and/or the information about the frequency domain resource of the second resource includes an index of a subchannel for transmitting sidelink control information for scheduling the second PRS.

In a possible implementation, the second information indicates that the second resource does not exist.

In a possible implementation, the indication information of the third resource includes a quantity of third resources.

In a possible implementation, the indication information of the third resource includes a time domain range of the third resource.

In a possible implementation, the time domain range of the third resource indicates the second device to determine the third resource in the time domain range.

In a possible implementation, the indication information of the third resource further includes one or more of the following information indicating the time domain range: a reference slot position; a position of an initial transmission resource of the second PRS or the third PRS; and duration of the time domain resource range.

In a possible implementation, the indication information of the third resource includes information about a time domain resource of the third resource and/or information about a frequency domain resource of the third resource. In a possible implementation, the information about the frequency domain resource of the third resource includes a position of a resource element of the third PRS in frequency domain; and/or the information about the frequency domain resource of the third resource includes an index of a subchannel for transmitting sidelink control information for scheduling the third PRS.

In a possible implementation, the communication apparatus and the second device are terminal devices, and the first information and/or the second information are/is indicated by a network device.

In a possible implementation, the first information and/or the second information are/is carried in sidelink control information SCI or a media access control MAC control element CE.

In a possible implementation, the SCI or the MAC CE indicates the second information by using a bit sequence, and the bit sequence is 1 bit or 2 bits.

In a possible implementation, the SCI or the MAC CE further includes one or more of the following information: the second PRS and/or the third PRS and the reservation period of the first PRS; priorities of the second PRS and/or the third PRS and the first PRS; an identifier or a source identifier of the communication apparatus; an identifier or a destination identifier of the second device; and an intra-group identifier of at least one second device.

In a possible implementation, the second resource and/or the third resource and the first resource include an initial transmission resource and at least one retransmission resource.

According to a fifteenth aspect, a communication apparatus is provided. The communication apparatus may be the communication apparatus according to any one of the possible implementations of the eighth aspect to the fourteenth aspect in the foregoing embodiments, or a chip disposed in the communication apparatus according to any one of the eighth aspect to the fourteenth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first device, the second device, the third device, or the network device according to any one of the possible implementations of the first aspect to the seventh aspect.

It should be understood that the communication interface may be implemented by using an antenna, a feeder, a codec, and the like in the communication apparatus. Alternatively, if the communication apparatus is a chip disposed in a network device or a terminal device, the communication interface may be an input/output interface of the chip, for example, an input/output pin. The communication apparatus may further include a transceiver, configured to perform communication between the communication apparatus and another device.

According to a sixteenth aspect, an embodiment of this application provides a chip system. The chip system includes a processor, configured to implement the method according to any one of the possible implementations of the first aspect to the seventh aspect. The chip system may further include a memory. In a possible implementation, the chip system further includes the memory, configured to store program instructions and/or data. The chip system may include a chip, or may include a chip and another discrete component.

According to a seventeenth aspect, this application provides a computer-readable storage medium. The computer-readable storage medium stores a computer program or instructions. When the computer program or the instructions are run, the method performed by the first device, the second device, the third device, or the network device in the foregoing aspects is implemented.

According to an eighteenth aspect, a computer program product is provided. The computer program product includes computer program code or instructions. When the computer program code or the instructions are run, the method performed by the first device, the second device, the third device, or the network device in the foregoing aspects is performed.

According to a nineteenth aspect, a communication apparatus is provided. The communication apparatus includes units or modules configured to perform the methods in the foregoing aspects.

According to a twentieth aspect, a chip system is provided, and includes a logic circuit and an input/output interface. The logic circuit is configured to perform the method performed by the first device, the second device, the third device, or the network device. The input/output interface is configured to communicate with another apparatus.

For beneficial effect of the eighth aspect to the twentieth aspect and the implementations thereof, refer to the description of beneficial effect of the methods according to the first aspect to the seventh aspect and the implementations thereof.

BRIEF DESCRIPTION OF DRAWINGS

FIG. 1 is a diagram of a single-sided sidelink RTT positioning scenario;
FIG. 2 is a diagram of a double-sided sidelink RTT positioning scenario;
FIG. 3 is a diagram of another double-sided sidelink RTT positioning scenario;
FIG. 4 is a diagram of still another double-sided sidelink RTT positioning scenario;
FIG. 5 is a diagram of a sidelink TDOA positioning scenario;
FIG. 6 is a diagram of another sidelink TDOA positioning scenario;
FIG. 7 is a diagram of a communication system according to an embodiment of this application;
FIG. 8 is a diagram of another communication system according to an embodiment of this application;
FIG. 9 is a diagram of a sensing window and a selection window according to an embodiment of this application;
FIG. 10 is a diagram of a reserved resource according to an embodiment of this application;
FIG. 11 is an example flowchart of an information transmission method according to an embodiment of this application;
FIG. 12 is a diagram of an initial transmission resource and at least one retransmission resource according to an embodiment of this application;
FIG. 13 is a diagram of a time sequence structure of a PRS according to an embodiment of this application;
FIG. 14A is a diagram of a candidate resource determining manner according to an embodiment of this application;
FIG. 14B is a diagram of another candidate resource determining manner according to an embodiment of this application;
FIG. 15A is a diagram of still another candidate resource determining manner according to an embodiment of this application;
FIG. 15B is a diagram of still another candidate resource determining manner according to an embodiment of this application;
FIG. 15C is a diagram of still another candidate resource determining manner according to an embodiment of this application;
FIG. 16 is an example flowchart of another information transmission method according to an embodiment of this application;
FIG. 17 is an example flowchart of still another information transmission method according to an embodiment of this application;
FIG. 18 is an example flowchart of still another information transmission method according to an embodiment of this application;
FIG. 19 is a diagram of a communication apparatus according to an embodiment of this application;
FIG. 20 is a diagram of another communication apparatus according to an embodiment of this application;
FIG. 21 is a diagram of still another communication apparatus according to an embodiment of this application; and

FIG. 22 is a diagram of still another communication apparatus according to an embodiment of this application.

DESCRIPTION OF EMBODIMENTS

To facilitate understanding of technical solutions provided in embodiments of this application, the following explains some scenarios and technical terms in embodiments of this application.

In daily life and applications, position information becomes increasingly important basic information. When a user is in an outdoor environment, a satellite can provide position information identified by a device. When the user is in an indoor environment, it is more difficult to obtain an accurate position of the device. For example, in an area such as home entertainment, telemedicine, online learning and education, an indoor shopping mall, an indoor parking lot, or a tunnel, people have a strong demand for accurate position information. However, due to signal blockage and other factors, a satellite-based positioning technology and a cellular base station-based positioning technology cannot meet an actual application requirement.

In addition, even in an outdoor scenario, precision of a current civil satellite is generally within a range of 5 meters to 10 meters. In a scenario where high-precision positioning is required, for example, during autonomous driving, the current satellite cannot meet an actual application requirement in the outdoor scenario. To meet the requirements of the foregoing application scenarios, sidelink (sidelink, SL) positioning between devices has attracted increasing attention.

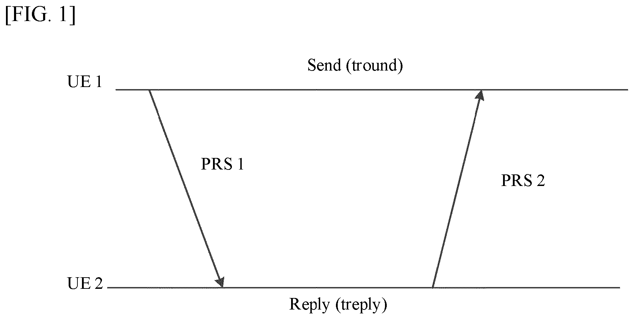

FIG. 1 is a diagram of a single-sided sidelink round-trip time (round-trip time, RTT) positioning scenario. As shown in FIG. 1, UE 1 and the UE 2 may determine round-trip time between the UE 1 and the UE 2 by transmitting a PRS. For example, the UE 1 may send a PRS 1 to the UE 2, and the UE 2 may send a PRS 2 to the UE 1. The round-trip time between the UE 1 and the UE 2 may be obtained through calculation based on sending time and receiving time of the PRS 1 and the PRS 2.

In FIG. 1, the PRS 1 and the PRS 2 are used for same sidelink positioning, or may be used for generation of a same sidelink positioning report. Therefore, the PRS 1 and the PRS 2 may be referred to as associated PRSs, or may be referred to as mutually associated PRSs for completing one sidelink positioning. It may be understood that, in FIG. 1, the sending time of the PRS 2 is in a reservation period of the PRS 1.

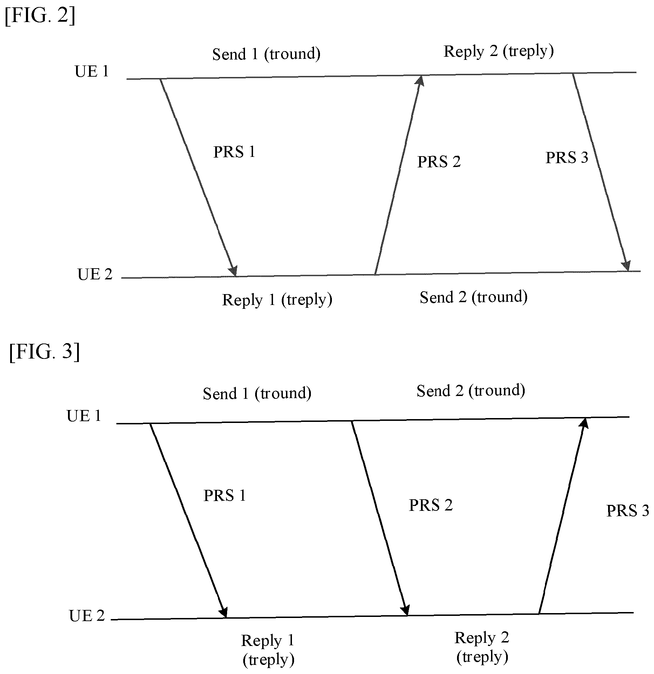

FIG. 2 is a diagram of a double-sided sidelink RTT positioning scenario. As shown in FIG. 2, UE 1 sends a PRS 1 to UE 2, the UE 2 sends a PRS 2 to the UE 1, and the UE 1 sends a PRS 3 to the UE 2. Round-trip time between the UE 1 and the UE 2 may be obtained through calculation based on sending time and receiving time of the PRS 1, the PRS 2, and the PRS 3.

Similarly, in FIG. 2, the PRS 1, the PRS 2, and the PRS 3 may be referred to as associated PRSs.

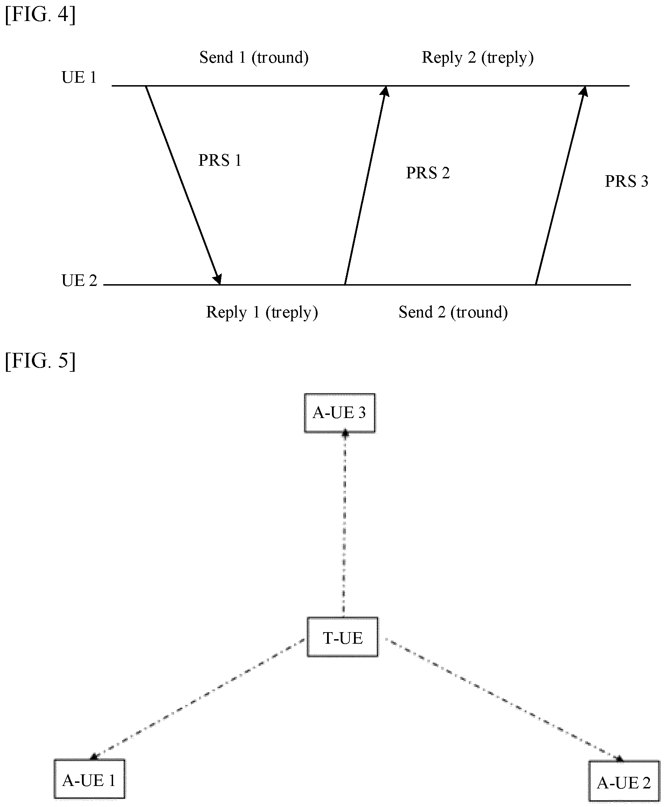

It should be noted that, in the double-sided sidelink RTT positioning scenario, the UE 1 may send PRSs to the UE 2 twice, or the UE 2 may send PRSs to the UE 1 twice, as shown in FIG. 3 and FIG. 4.

For example, in FIG. 3, the UE 1 sends a PRS 1 to the UE 2, and the UE 1 sends a PRS 2 to the UE 2, and the UE 2 sends a PRS 3 to the UE 1. Round-trip time between the UE 1 and the UE 2 may be obtained through calculation based on transmission of the PRSs between the UE 1 and the UE 2.

For another example, in FIG. 4, the UE 1 sends a PRS 1 to the UE 2, the UE 2 sends a PRS 2 to the UE 1, and the UE 2 sends a PRS 3 to the UE 1. Round-trip time between the UE 1 and the UE 2 may be obtained through calculation based on transmission of the PRSs between the UE 1 and the UE 2.

FIG. 5 is a diagram of a sidelink time difference of arrival (time difference of arrival, TDOA) positioning scenario. As shown in FIG. 5, an anchor device (T-UE) may send a PRS to reference (A-UE) UE 1, A-UE 2, and A-UE 3. The A-UE 1, the A-UE 2, and the A-UE 3 may separately measure the PRS, and send positioning measurement reports to the T-UE. Therefore, the T-UE can determine a TDOA of the T-UE based on the positioning measurement reports.

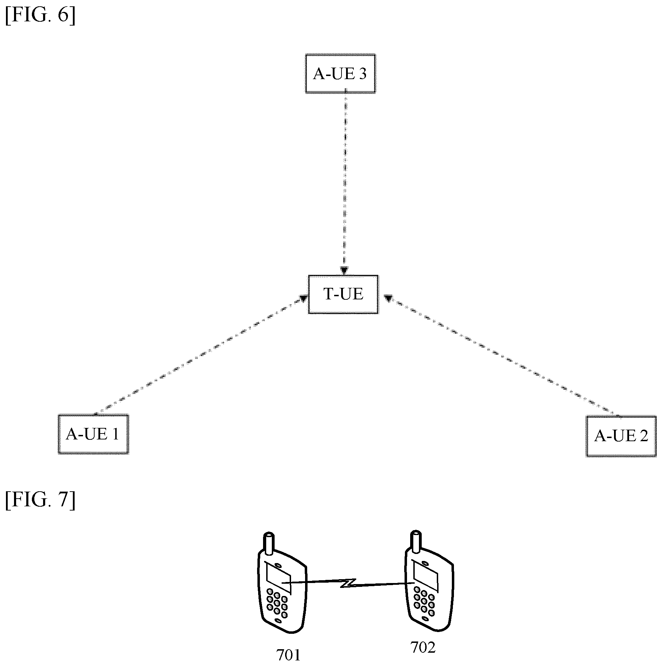

It may be understood that, in the sidelink TDOA positioning scenario, the A-UE may alternatively send a PRS to the T-UE. Refer to FIG. 6. A-UE 1, A-UE 2, and A-UE 3 may separately send PRSs to T-UE. In this way, the T-UE can separately measure the PRSs, and determine a TDOA of the T-UE based on measurement results.

The technical solutions provided in embodiments of this application are described below with reference to the accompanying drawings.

FIG. 7 describes a communication system to which technical solutions provided in embodiments of this application are applicable. Refer to FIG. 7. The communication system may include a terminal device 701 and a terminal device 702. The terminal device 701 and the terminal device 702 may communicate with each other through a sidelink. It may be understood that the communication system may further include more terminal devices, which are not shown in FIG. 7.

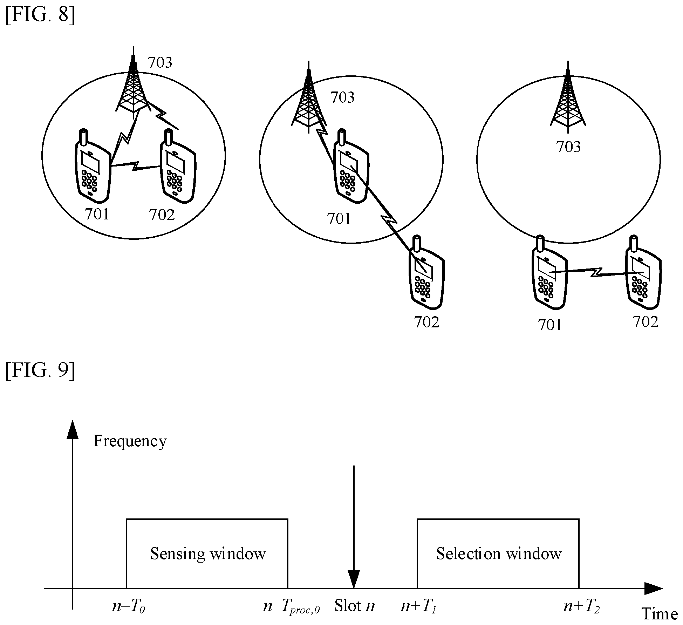

Optionally, the communication system may further include a network device. Refer to FIG. 8. The communication system may include a network device 703. The network device 703 may communicate with the terminal device 701, or the network device 703 may communicate with the terminal device 702.

The terminal device in this application includes a device that provides a voice and/or data signal connectivity for a user. Specifically, the terminal device includes the device that provides the voice for the user, the device that provides the data signal connectivity for the user, or the device that provides the voice and the data signal connectivity for the user. For example, the terminal device may include a hand-held device with a wireless connection function or a processing device connected to a wireless modem. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), a satellite, an uncrewed aerial vehicle, a balloon, an aircraft, or the like. For example, the terminal device may include a mobile phone (or referred to as a "cellular" phone), a computer having a mobile terminal device, or a portable, pocket-sized, hand-held, or a computer-embedded mobile apparatus. For example, it may be a device such as a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example and not limitation, in embodiments of this application, the terminal device may alternatively be a wearable device. The wearable device may also be referred to as a wearable intelligent device, an intelligent wearable device, or the like, and is a general term for wearable devices developed by intelligently designing everyday wearing by applying a wearable technology. If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU).

The network device in this application includes, for example, an access network (access network, AN) device, for example, a base station (for example, an access point), and may be a device that is in an access network and that communicates with a wireless terminal device through an air interface in one or more cells. Alternatively, the network device is, for example, a roadside unit (roadside unit, RSU) in a vehicle-to-everything (vehicle-to-everything, V2X) technology. The network device may include an evolved NodeB (NodeB or eNB or e-NodeB, evolved NodeB) in a long term evolution (long term evolution, LTE) or long term evolution-advanced (long term evolution-advanced, LTE-A) system, may include a next generation NodeB (next generation NodeB, gNB) in an evolved packet core (evolved packet core, EPC), a 5th generation (the 5th generation, 5G) mobile communication technology, or a new radio (new radio, NR) system (also referred to as an NR system for short), or may include a central unit (central unit, CU) and a distributed unit (distributed unit, DU) in a cloud radio access network (cloud radio access network, Cloud RAN) system, a satellite, an uncrewed aerial vehicle, a balloon, an aircraft, or the like. This is not limited in embodiments of this application.

To facilitate understanding of the technical solutions in embodiments of this application, before the solutions in embodiments of this application are described, some terms or concepts that may be used in embodiments of this application are first described.

1. Time-frequency resource

A time domain resource and a frequency domain resource may be collectively referred to as the time-frequency resource, and the time-frequency resource may be used to transmit data or control information.

In time domain, the time-frequency resource may include one or more time units (or may be referred to as time domain units). A time unit may be any minimum time unit used to transmit data or control information, such as a slot (slot) including 14 symbols, a mini-slot (mini-slot) including seven symbols, a partial slot (partial slot), a symbol, a subframe (subframe), or a radio frame (frame).

In frequency domain, the time-frequency resource may include one or more frequency domain units. A frequency domain unit may be a resource element (resource element, RE), a resource block (resource block, RB), a subchannel (subchannel), an interlace (interlace), a resource pool (resource pool), a bandwidth (bandwidth), a bandwidth part (bandwidth part, BWP), a resource block set (RB set), a carrier (carrier), a channel (channel), an interlace (interlace) RB, or the like. Optionally, one RB set may be a quantity of available resources in a bandwidth of a predefined size. For example, one RB set corresponds to a quantity of available resources in a 20 MHz bandwidth. Optionally, the subchannel may be a frequency domain resource unit including a preset quantity of contiguous RBs, or may be a frequency domain resource unit including a preset quantity of non-contiguous RBs. This is not limited in the present invention.

## 2. Resource pool

NR-SL communication is based on a resource pool (resource pool). The resource pool is a time-frequency resource dedicated to SL communication. Frequency domain resources included in the resource pool are contiguous. Time domain resources included in the resource pool may be contiguous or discontiguous. Different resource pools are identified by SL-ResourcePoolID. UE performs receiving in a receiving resource pool and performs sending in a sending resource pool. If resource pools have a same resource pool index, it may be considered that time-frequency resources in the resource pools completely overlap.

In SL-U, because a frequency band is shared by UE in a plurality of forms, for example, SL UE, Wi-Fi UE, and Bluetooth UE perform transmission in a same frequency band. The SL resource pool may also be understood as a set of resources that may be used for SL transmission. In this embodiment, the resource pool may also be referred to as a channel (channel), an operating channel (Operating channel), and a nominal channel (Nominal Channel Bandwidth) bandwidth (bandwidth). In other words, the resource pool, the channel, and the bandwidth are all represent the set of resources that may be used for SL transmission.

Optionally, one resource pool may include one or more RB sets.

## 3. Priority

Data of different services sent by the UE and data transmitted in a same time unit or channel may correspond to different priorities. A higher priority indicates that to-be-transmitted data is more important, or more urgent, or has a higher reliability requirement. On the contrary, a lower priority indicates that to-be-transmitted data is less important, less urgent, or has a lower reliability requirement.

It may be understood that there may be a correspondence between a priority level and a priority value. For example, a higher priority level corresponds to a lower priority value, or a lower priority level corresponds to a lower priority value. For example, the higher priority level corresponds to the lower priority value, and the priority value may be an integer ranging from 1 to 8 or an integer ranging from 0 to 7. If the priority value ranges from 1 to 8, the priority value 1 indicates a highest-level priority.

## 4. Identifier of a sending device

The identifier of the sending device may be a source identifier, or may be a device identifier of the sending device, or may be a temporary identifier configured by using signaling or predefined. This is not limited. Optionally, the source identifier of the sending device may be an identifier associated with a specific to-be-sent service or message.

## 5. Identifier of a receiving device

The identifier of the receiving device may be a destination identifier, or may be an identifier of a receiving device, or may be a temporary identifier configured by using signaling or predefined. This is not limited. Optionally, the destination identifier of the receiving device may be an identifier associated with a specific to-be-received service or message.

## 6. SL resource allocation mode

There may be two modes (mode) for resource allocation (resource allocation, RA) in SL transmission: a mode 1 (mode 1) and a mode 2 (mode 2) based on different resource allocation subjects. Optionally, in some cases, the mode 1 is also referred to as a previous scheme (scheme) 1, and the mode 2 is referred to as a previous scheme (scheme) 2. In this embodiment of this application, names of the two modes constitute no limitation on this application. In the mode 1, time-frequency resources for SL transmission are centrally scheduled by a network device, and in the mode 2, time-frequency resources for SL transmission are determined by a terminal device. The following briefly describes a resource allocation manner in the mode 2.

Refer to FIG. 9. In the mode 2, one time point and two time windows are defined. The time point is a slot in which a higher layer (higher layer) of the terminal device triggers resource selection for sending a PSCCH and/or a PSSCH. As shown in FIG. 9, the slot may be referred to as a slot n. One of the two time windows is a sensing window (sensing window), and is a time window used by the terminal device to sense occupation of time-frequency resources around the terminal device. For example, the sensing window may correspond to a slot range $[n-T_0, n-T_{proc,0}]$ in FIG. 9. The other one of the two time windows is a selection window (selection window), and is a time window used by the terminal device to determine a candidate resource (candidate single-slot resource) (resource for short) based on a sensing result in the sensing window, and the selection window is after the sensing window in time domain. For example, the selection window may correspond to a slot range $[n+T_1, n+T_2]$ in FIG. 9.

Based on the foregoing description, a basic procedure of the resource allocation mode 2 is briefly described.

It is assumed that a slot set of a resource pool is defined as $(t_0'^{SL}, t_1'^{SL}, t_2'^{SL}, ...)$.

Step 1: The terminal determines the selection window $[n+T_1, n+T_2]$.

n is a moment at which resource selection is triggered.

A value of $T_1$ depends on implementation of the terminal, but $T_1$ needs to satisfy: $0 \leq T_1 \leq T_{proc,1}^{SL}$. A value of $T_{proc,1}^{SL}$ is related to a subcarrier spacing. For example, a value of $T_{proc,1}^{SL}$ may be determined based on Table 1. Table 1 shows values of $T_{proc,1}^{SL}$ at different subcarrier spacings.

Table 1:

| Example of values of $T_{proc,1}^{SL}$ at different subcarrier spacings | |
|---|---|
| $\mu_{SL}$ Subcarrier spacing | $T_{proc,1}^{SL}$ [Unit: slot] |
| 0 | 3 |
| 1 | 5 |
| 2 | 9 |
| 3 | 17 |

A value of $T_2$ is related to a minimum value of $T_2$ and a remaining packet delay budget (packet delay budget, PDB). For example, if a value of $T_{2min}$ is less than the PDB, a value of $T_2$ depends on implementation of the terminal, but $T_2$ needs to satisfy: $T_{2min} \leq T_2 \leq PDB$. If a value of $T_{2min}$ is greater than the PDB, a value of $T_2$ is the PDB, where $T_{2min}$ is the minimum value of $T_2$, and the PDB is in the unit of slots.

In the selection window $[n + T_1, n + T_2]$, the total number of single candidate resources in the resource pool is $M_{total}$.

Step 2: The terminal determines the sensing window $[n - T_0, n - T_{proc,o}^{SL}]$.

n is a moment at which resource selection is triggered.

$T_0$ is a quantity of slots corresponding to the sensing window $[n - T_0, n - T_{proc,o}^{SL}]$.

A value of $T_{proc,o}^{SL}$ is related to a subcarrier spacing. For example, a value of $T_{proc,o}^{SL}$ may be determined based on Table 2. Table 2 shows values of $T_{proc,o}^{SL}$ at different subcarrier spacings.

Table 2:

| Example of values of $T_{proc,o}^{SL}$ at different subcarrier spacings | |
|---|---|
| $\mu_{SL}$ Subcarrier spacing | $T_{proc,1}^{SL}$ [Unit: slot] |
| 0 | 1 |
| 1 | 1 |
| 2 | 2 |
| 3 | 4 |

Step 3: The terminal obtains a sensing result in the sensing window $[n - T_0, n - T_{proc,o}^{SL}]$.

The sensing result may include at least one of the following: a PSCCH decoding result and an RSRP measurement result.

Step 4: The terminal determines, based on the sensing result, a resource used to transmit the PSSCH.

In a possible implementation, it is assumed that a set of resources used to transmit the PSSCH is $S_A$, and an initial value of $S_A$ is a set of candidate resources in a resource pool 1 in the selection window $[n+T_1, n+T_2]$. The terminal excludes, from $S_A$, a single candidate resource $R_{x,y}$ that meets all the following conditions:

Condition 1: SCI is received, and the SCI includes a resource reservation period field and a priority field.

For example, the terminal receives SCI in a slot $t'^{SL}_m$, and the SCI includes a resource reservation period field and a priority field. The resource reservation period field indicates $P_{rsvp\_RX}$, and the priority field indicates $prio_{RX}$.

Condition 2: An RSRP measurement value corresponding to a reserved resource indicated by the SCI is greater than an RSRP threshold A.

A is $Th(p_{rsvp\_RX}, prio_{RX})$.

Condition 3: The single candidate resource overlaps the reserved resource indicated by the SCI.

For example, if the terminal receives SCI in a slot $t'^{SL}_m$, and the SCI includes a resource reservation period field, the terminal is expected to receive the same SCI in a slot $t'^{SL}_{m+q \times p'_{rsvp\_RX}}$, and the terminal determines a set of RBs and slots that overlap $R_{x, y+j \times r'_{rsvp\_TX}}$.

$q = 1, 2, ..., Q, j = 0, 1, ..., C_{resel} - 1$, and $C_{resel}$ are integers. Herein, $P'_{rsvp\_RX}$ is obtained by converting a unit of $p_{rsvp\_RX}$ into logical slot. If $p_{rsvp\_RX} < T_{scal}$ and $n'-m \leq p'_{rsvp\_RX}$, $Q = \left\lceil \dfrac{T_{scal}}{p_{rsvp\_RX}} \right\rceil$, where if the slot n belongs to the set $(t'^{SL}_0, t'^{SL}_1, ..., t'^{SL}_{T'_{max}-1})$, $t'^{SL}_{n'} = n$; otherwise, the slot $t'^{SL}_{n'}$ after the slot n belongs to the first slot of the set $(t'^{SL}_0, t'^{SL}_1, ..., t'^{SL}_{T'_{max}-1})$. Otherwise, Q=1. $T_{scal}$ is obtained by converting a unit of $T_2$ into millisecond (msec).

Then, the terminal determines whether a quantity of single candidate resources in $S_A$ is greater than $X \cdot M_{total}$. If the quantity of single candidate resources in $S_A$ is less than $X \cdot M_{total}$, the terminal increases the RSRP threshold $Th$ $(p_{rsvp\_RX}, prio_{RX})$ by 3 dB, and performs an exclusion process again. If the quantity of single candidate resources in $S_A$ reaches $X \cdot M_{total}$, the exclusion process ends, and current $S_A$ is a set of single candidate resources that can be used to transmit the PSSCH.

Step 5: The terminal reports determined $S_A$ to a higher layer of the terminal device, so that the higher layer of the terminal device determines, based on reported $S_A$, a resource used to transmit the PSSCH. Optionally, the higher layer of the terminal device is a layer above a physical layer, for example, a MAC layer, an RRC layer, or a PDCP layer. This is not limited in the present invention. Optionally, $S_A$ may be considered as an available resource of the terminal device.

8. Reserved resource

The reserved resource in embodiments of this application is a resource reserved for transmitting data or information, and includes a time domain resource and a frequency domain resource. The reserved resource may be periodically distributed, and a time interval between two adjacent reserved resources may be referred to as a reservation period (reservation period), or a resource reservation period (resource reservation period).

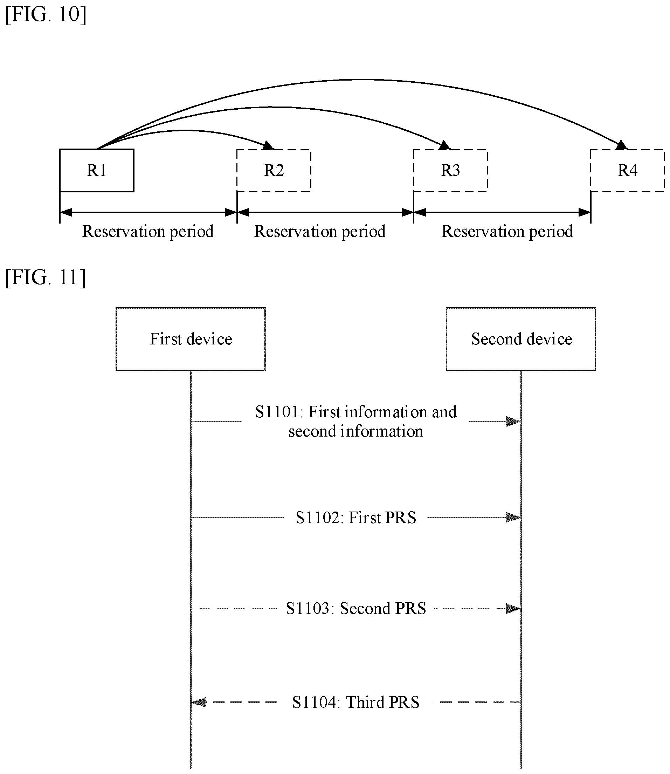

For example, FIG. 10 is a diagram of reserved resources. In FIG. 10, R1 is a resource (shown by a solid line in the figure) for transmitting first data, and includes a time domain resource and a frequency domain resource of the first data. In FIG. 10, R2, R3, and R4 are reserved resources (shown by dashed lines in the figure) corresponding to the first data. It may be understood that FIG. 10 shows three reserved resources corresponding to the first data. However, in actual transmission, the first data may correspond to only one or two reserved resources, or may correspond to four or more reserved resources. This is not limited in this application.

In an example, the reserved resource corresponding to the first data is a resource determined based on the frequency domain resource and the time domain resource of the first data and a reservation period indicated by SCI corresponding to the first data. For example, SCI corresponding to the first data is received in a slot $t'^{SL}_m$, and a slot in which a corresponding reserved resource is located is $t'^{SL}_{m+q \times P'_{rsvp\_RX}}$, where q is a positive integer, and $P'_{rsvp\_RX}$ is a reservation period of the first data or a reservation period of first COT in which the first data is located. Optionally, for the reservation period, $P_{rsvp\_RX}$ is a reservation period indicated by the SCI of the first data, and is in a unit of millisecond (ms), and $P'_{rsvp\_RX}$ is a reservation period in a logical slot converted from the reservation period indicated by $P_{rsvp\_RX}$. Optionally, a frequency domain resource in the reserved resource corresponding to the first data is the same as the frequency domain resource of the first data. A frequency domain resource in the reserved resource corresponding to the first data is the same as the time domain resource of the first data.

The following provides description with reference to an example in FIG. 10.

If a "resource reservation period" field in the SCI corresponding to the first data is not empty or is a positive integer, the reserved resources R2, R3, and R4 may be determined based on a reservation period indicated by the "resource reservation period" field and the time domain resource and the frequency domain resource corresponding to the R1 resource. For example, a time interval between a start position of a slot in which R2 is located and a start position of a slot in which R1 is located is a reservation period, a time interval between an end position of the slot in which R2 is located and an end position of the slot in which R1 is located are also a reservation period, and a frequency domain resource of R2 is the same as a frequency domain resource of R1. Similarly, a time interval between a start position of a slot in which R3 is located and a start position of a slot in which R2 is located is a reservation period, an end position of the slot in which R3 is located and an end position of the slot in which R2 is located are also a reservation period, and a frequency domain resource of R3 is the same as a frequency domain resource of R2. A time interval between a start position of a slot in which R4 is located and a start position of a slot in which R3 is located is a reservation period, an end position of the slot in which R4 is located and an end position of the slot in which R3 is located are also a reservation period, and a frequency domain resource of R4 is the same as a frequency domain resource of R3.

Currently, in sidelink communication, UE 1 may indicate, to UE 2, resources for initial transmission and retransmission of one piece of data transmitted by the UE 1. The UE 2 may receive data on the correspondingly indicated initial transmission resource and retransmission resource. However, in a sidelink positioning scenario, the UE 1 not only needs to send initial transmission and retransmission resources of a first PRS to the UE 2, and may also need to send a second PRS (including initial transmission and retransmission) to the UE 2, or request the UE 2 to send initial transmission and retransmission of a third PRS. On the other hand, the UE 1 may not send the second PRS to the UE 2, or the UE 1 may not send the second PRS to UE 3. Therefore, if the communication indication initial transmission and retransmission method is reused, a problem of initial transmission and retransmission resource indication of the second PRS and/or the third PRS in sidelink positioning cannot be resolved. In addition, a problem of whether the initial transmission and retransmission resources of the second PRS and/or the third PRS exist cannot be handled. If the indication is performed in all scenarios, the UE 1 indicating the resource to the UE 2 is an invalid indication when the second PRS and/or the third PRS do not exist. Based on these invalid indications, the UE 2 cannot receive the second PRS on the resource of the second PRS. This may cause a sidelink positioning failure, and affect sidelink positioning precision.

In view of this, an embodiment of this application provides an information transmission method. In the method, a first device may send first information and second information to a second device. The first information may indicate a first resource used by the first device to send a first PRS. The second information may indicate whether a second resource used by the first device to send a second PRS exists and/or indicate whether a third resource used by the second device to send a third PRS exists. Whether the second resource exists and/or whether the third resource exists are/is indicated to the second device. This can reduce a case in which the first device sends an invalid resource to the second device. In addition, the first device and the second device may transmit the PRS on the indicated resource, to perform sidelink positioning. This can improve sidelink positioning precision.

FIG. 11 is an example flowchart of an information transmission method according to an embodiment of this application. The method may include the following operations.

S1101: A first device sends first information and second information to a second device.

Correspondingly, the second device receives the first information and the second information from the first device.

The first information may indicate a first resource used by the first device to send a first PRS. For example, the first information may include time domain resource indication information, frequency domain resource indication information, a period, or the like of the first resource. Optionally, the first information may include one or more of the following information 1 to information 7.

Information 1: priority (priority) information

The priority information may indicate a priority of a scheduled PRS, for example, a priority of the first PRS. Optionally, the priority information may indicate priority values from 1 to 8 by using 3 bits. A higher priority value indicates a higher priority of the first PRS.

Information 2: frequency domain resource assignment (frequency domain resource assignment, FDRA)

The FDRA may indicate a frequency domain resource position of a scheduled PRS, for example, the first PRS.

Alternatively, the FDRA may indicate a frequency domain resource position of a PSCCH. Optionally, the PSCCH includes sidelink control information SCI, and the SCI is used to schedule the first PRS. Optionally, the frequency domain resource position of the PSCCH may be an index of a first resource of a frequency domain resource on which the PSCCH is located, or an index of a last resource of a frequency domain resource on which the PSCCH is located. This is not limited in the present invention. For example, when the resource of the PSCCH is a subchannel, the frequency domain resource position of the PSCCH may be an index of a first subchannel of the subchannel occupied by the PSCCH in a resource pool, or may be an index of a last subchannel of the subchannel occupied by the PSCCH in a resource pool.

Optionally, the first resource may include a resource for the first transmission and a resource for at least one retransmission. For example, the FDRA may indicate a frequency domain resource position at which the first PRS is transmitted for the first time and a frequency domain resource position at which the first PRS is retransmitted for at least one time.

Information 3: time domain resource assignment (time domain resource assignment, TDRA)

The TDRA may indicate a time domain resource position of a scheduled PRS, for example, the first PRS.

Alternatively, the TDRA may indicate a time domain resource position of a PSCCH. Optionally, the PSCCH includes sidelink control information SCI, and the SCI is used to schedule the first PRS.

Optionally, the first resource may include a resource for the first transmission and a resource for at least one retransmission. For example, the TDRA may indicate a time domain resource position at which the first PRS is transmitted for the first time and a time domain resource position at which the first PRS is retransmitted for at least one time.

Information 4: reservation period (reservation period)

When scheduled PRSs such as the first PRS, a second PRS, and/or a third PRS periodically appear/appears, a reservation period for sending the PRS may be further indicated.

Information 5: source identifier (source identifier, source ID)

The source identifier may be a sending identifier indicating or identifying sending of the PRS. Alternatively, the source identifier may be an identifier of a device for sending the first PRS.

Information 6: destination identifier (destination ID)

The destination identifier may be a receive-end identifier indicating or identifying receiving of the PRS. Alternatively, the destination identifier may be a receiver identifier of a receiver.

Information 7: transmit beam identifier indication information (beam ID)

The transmit beam identifier indication information may include a transmit beam identifier of a transmitter. Alternatively, the transmit beam identifier indication information may include a resource identifier of the sent first PRS, and the resource identifier is mutually associated with an identifier or a resource of another reference signal having a beam identifier.

In a possible implementation, the second information may indicate whether a second resource exists and/or the second information may indicate whether a third resource exists. For example, the second information may indicate whether the second resource exists. For another example, the second resource may indicate whether the third resource exists. For another example, the second information may indicate whether the second resource exists and whether the third resource exists. In this specification, time domain positions/a time domain position of the second resource and/or the third resource may be after a time domain position of the first resource.

In the foregoing description, the second resource may be used by the first device to send the second PRS, and the third resource may be used by the second device to send the third PRS. It may be understood that the first PRS, the second PRS, and the third PRS may be mutually associated PRSs. The first PRS, the second PRS, and the third PRS may be used for one sidelink positioning, or the first PRS, the second PRS, and the third PRS may be used for generation of a same positioning measurement report. In this specification, the second PRS and/or the third PRS may be in a reservation period of the first PRS.

In an example, the second information may include first indication information. The first indication information may indicate that the second resource exists or the second resource does not exist. For example, the first indication information is 1-bit information. When a value of the first indication information is 0, it may be considered that the first indication information indicates that the second resource does not exist. In other words, the second information indicates that the second resource does not exist. When a value of the first indication information is 1, it may be considered that the first indication information indicates that the second resource exists. In other words, the second information indicates that the second resource exists. On the contrary, when a value of the first indication information is 1, it may be considered that the first indication information indicates that the second resource does not exist. In other words, the second information indicates that the second resource does not exist. When a value of the first indication information is 0, it may be considered that the first indication information indicates that the second resource exists. In other words, the second information indicates that the second resource exists. Optionally, the first indication may alternatively be indicated by a value of a parameter indicating the second resource. For example, when the parameter indicating the second resource is a first value, it indicates that the second resource exists. For another example, when the parameter indicating the second resource is a second value, it indicates that the second resource does not exist. Optionally, the first value is different from the second value.

In the foregoing description, when the second information indicates that the second resource does not exist, or the first indication information indicates that the second resource does not exist, the second device does not need to receive or blindly detect the PRS.

It should be noted that the first indication information is merely shown as an example, and the first indication information may alternatively be 2-bit information or information of more bits. This is not specifically limited in this application.

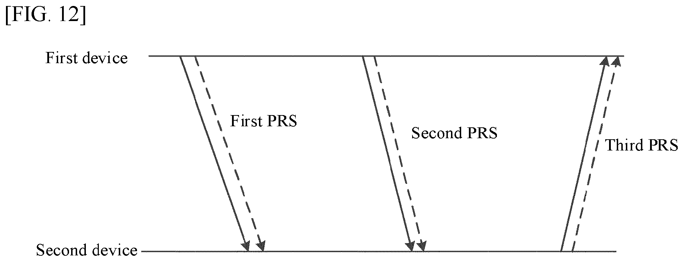

In a possible case, the first resource, the second resource, and the third resource shown in this embodiment of this application may respectively include an initial transmission resource and at least one retransmission resource. The following uses FIG. 12 as an example for description.

Refer to FIG. 12. First information may indicate a first resource, and the first resource may include an initial transmission resource of a first PRS and at least one retransmission resource of the first PRS. A first device may send the first PRS to a second device on the initial transmission resource of the first PRS. The first device may retransmit the first PRS to the second device on the at least one retransmission resource of the first PRS. Similarly, second information may indicate that a second resource exists, and the second resource may include an initial transmission resource of a second PRS and at least one retransmission resource of the second PRS. The first device may send the second PRS to the second device on the initial transmission resource of the second PRS. The first device may retransmit the second PRS to the second device on the at least one retransmission resource of the second PRS. Similarly, the second information may indicate that a third resource exists, and the third resource may include an initial transmission resource of a third PRS and at least one retransmission resource of the third PRS. The second device may send the third PRS to the first device on the initial transmission resource of the third PRS. The second device may retransmit the third PRS to the first device on the at least one retransmission resource of the third PRS.

In FIG. 12, initial transmission is represented by a solid line, and retransmission is represented by a dashed line. It may be understood that an example in which there is one retransmission resource is used for description in FIG. 12. Actually, there may be two, three, or more retransmission resources.

In a possible case, when first indication information indicates that the second resource exists, or when the second information indicates that the second resource exists, the second information may further include indication information of the second resource. The indication information of the second resource may include one or more of the following 1 to 4.

1. Quantity of second resources

The indication information of the second resource may include the quantity of second resources, that is, may include a quantity of sending resources of the first device, for example, one or two sending resources. The quantity of second resources may be understood as several times of transmission in addition to the first PRS.

FIG. 2 is used as an example. The terminal device 1 may indicate, to the terminal device 2, the first resource for sending the PRS 1, and indicate that the second resource exists. The terminal device 1 may indicate, to the terminal device 2, that the quantity of second resources is 1. In other words, the terminal device 1 further transmits a PRS, namely, the PRS 3, to the terminal device 2 once.

Based on this solution, the first device indicates the quantity of second resources to the second device, to save air interface resources.

2. Time domain range of the second resource

The indication information of the second resource may include the time domain range of the second resource, that is, may include a time domain range of the sending resource of the first device. The indication information of the second resource may include one or more of a reference slot position, duration, and the initial transmission resource of the second PRS, to indicate the time domain range of the second resource.

For example, the indication information of the second resource may include duration, and the duration may indicate the time domain range of the second resource. For another example, the indication information of the second resource may indicate a reference slot position, and the time domain range of the second resource may be considered as a time domain range after the reference slot position. For another example, the indication information of the second resource may indicate a position of the initial transmission resource of the second PRS. In this case, the time domain range of the second resource may be considered as a start position of the initial transmission resource and a time domain range after the start position of the initial transmission resource.

For another example, the indication information of the second resource may include duration and a reference slot position. In this case, the time domain range of the second resource may be considered as a range of the duration starting from the reference slot position. For another example, the indication information of the second resource may include duration and a position of the initial transmission resource of the second PRS. In this case, the time domain range of the second resource may be considered as a range of the duration starting from the position of the initial transmission resource.

Based on this solution, the first device indicates the time domain range of the second resource to the second device. In this way, blind detection complexity of the second device can be reduced when signaling overheads are reduced.

3. Information about the time domain resource of the second resource

The indication information of the second resource may include the information about the time domain resource of the second resource. For example, an index of a time domain resource unit of the second resource, for example, a slot number or a symbol index, may be included.

Based on this solution, the first device indicates the information about the time domain resource of the second resource to the second device, to reduce complexity of the second device.

4. Information about a frequency domain resource of the second resource

The indication information of the second resource may include the information about the frequency domain resource of the second resource. For example, an index of a frequency domain resource unit, for example, a subcarrier index, may be included.

In a possible case, the information about the frequency domain resource of the second resource may include one or more of a position of a resource element of the second PRS in frequency domain and an index of a subchannel for transmitting sidelink control information for scheduling the second PRS. The position of the resource element may be understood as a position of the second PRS in frequency domain. Optionally, the position of the resource element is a position of the RE occupied by the sent PRS in a comb.

When the information about the frequency domain resource of the second resource includes the position of the resource element of the second PRS in frequency domain, a frequency domain position of the initial transmission resource of the second PRS may be the same as or different from a frequency domain position of the retransmission resource of the second PRS.

When the information about the frequency domain resource of the second resource includes the index of the subchannel for transmitting the sidelink control information for scheduling the second PRS, a frequency domain resource position of the second resource may be the same as a position indicated by the index of the subchannel.

Optionally, the frequency domain resource position of the second resource may be the same as or different from a frequency domain resource position of the first resource. Optionally, when the indication information of the second resource does not include the information about the frequency domain resource of the second resource, the frequency domain resource position of the second resource may be the same as the frequency domain resource position of the first resource.

Based on this solution, the first device indicates the frequency domain resource of the second resource to the second device, to reduce complexity of the second device.

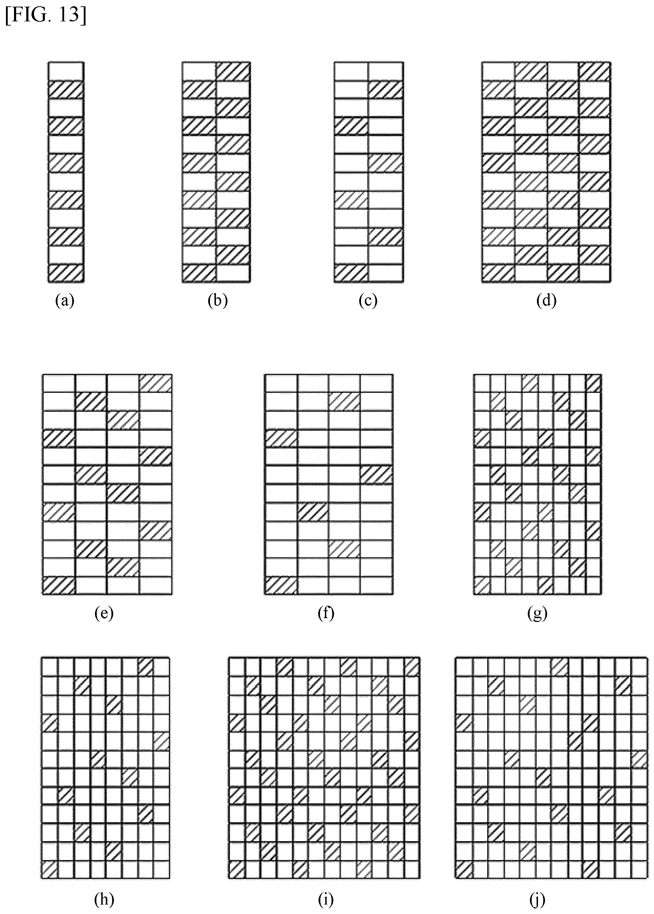

The following describes a time sequence structure of a PRS in an embodiment of this application with reference to FIG. 13. In the figures in FIG. 13, a horizontal axis represents a symbol occupied by the PRS, and one grid represents that the PRS occupies one symbol. A vertical axis represents a PRS occupation status in one PRB, one small grid is one RE, a white grid represents an RE on which the PRS is not sent, and a coordinated sub-grid represents an RE occupied by the PRS.

FIG. 13 is a diagram of time-frequency resources occupied by a PRS. (a) in FIG. 13 shows a time-frequency mapping pattern of the PRS when a comb size is 2 and the PRS occupies one symbol. (b) in FIG. 13 shows a time-frequency mapping pattern of the PRS when a comb size is 2 and the PRS occupies two symbols. (c) in FIG. 13 shows a time-frequency mapping pattern of the PRS when a comb size is 4 and the PRS occupies two symbols. (d) in FIG. 13 shows a time-frequency mapping pattern of the PRS when a comb size is 2 and the PRS occupies four symbols. (e) in FIG. 13 shows a time-frequency mapping pattern of the PRS when a comb size is 4 and the PRS occupies four symbols. (f) in FIG. 13 shows a time-frequency mapping pattern of the PRS when a comb size is 8 and the PRS occupies one symbol. (g) in FIG. 13 shows a time-frequency mapping pattern of the PRS when a comb size is 4 and the PRS occupies eight symbols. (h) in FIG. 13 shows a time-frequency mapping pattern of the PRS when a comb size is 8 and the PRS occupies eight symbols. (i) in FIG. 13 shows a time-frequency mapping pattern of the PRS when a comb size is 4 and the PRS occupies 12 symbols. (j) in FIG. 13 shows a time-frequency mapping pattern of the PRS when a comb size is 8 and the PRS occupies 12 symbols.

In the plurality of figures in FIG. 13, a shadow part may represent an RE occupied by the PRS, or may be understood as a position of a resource element of the PRS.

It may be understood that the first indication information and the indication information of the second resource may be indicated by using a same field, or may be indicated by using different fields. This is not specifically limited in this application.

In another example, the second information may include second indication information. The second indication information may indicate that the third resource exists or the third resource does not exist. For example, the second indication information is 1-bit information. When a value of the second indication information is 0, it may be considered that the second indication information indicates that the third resource does not exist. In other words, the second information indicates that the third resource does not exist. When a value of the second indication information is 1, it may be considered that the second indication information indicates that the third resource exists. In other words, the second information indicates that the third resource exists. On the contrary, when a value of the second indication information is 1, it may be considered that the second indication information indicates that the third resource does not exist. In other words, the second information indicates that the third resource does not exist. When a value of the second indication information is 0, it may be considered that the second indication information indicates that the third resource exists. In other words, the second information indicates that the third resource exists.

It should be noted that the second indication information is merely shown as an example, and the second indication information may alternatively be 2-bit information or information of more bits. This is not specifically limited in this application.

In a possible case, when the second indication information indicates that the third resource exists, or when the second information indicates that the third resource exists, the second information may further include indication information of the third resource. The indication information of the third resource may include one or more of the following (1) to (4).

(1) Quantity of third resources

The indication information of the third resource may include the quantity of third resources, that is, may include a quantity of sending resources of the first device, for example, one or two sending resources. The quantity of third resources may be understood as a quantity of several times of transmission in addition to the first PRS.

FIG. 2 is used as an example. The terminal device 1 may indicate, to the terminal device 2, the first resource for sending the PRS 1, and indicate that the third resource exists. The terminal device 1 may indicate, to the terminal device 2, that the quantity of third resources is 1. In other words, the terminal device 2 needs to transmit a PRS, namely, the PRS 2, to the terminal device 1 once.

Based on this solution, the first device indicates the quantity of third resources to the second device, to reduce signaling overheads and save air interface resources.

(2) Time domain range of the third resource

The indication information of the third resource may include the time domain range of the third resource, that is, may include a time domain range of the sending resource of the first device. The indication information of the third resource may include one or more of a reference slot position, duration, and the initial transmission resource of the second PRS, to indicate the time domain range of the third resource.

For example, the indication information of the third resource may include duration, and the duration may indicate the time domain range of the third resource. For another example, the indication information of the third resource may indicate a reference slot position, and the time domain range of the third resource may be considered as a time domain range after the reference slot position. For another example, the indication information of the third resource may indicate a position of the initial transmission resource of the second PRS. In this case, the time domain range of the third resource may be considered as a time domain range after the initial transmission resource.

For another example, the indication information of the third resource may include duration and a reference slot position. In this case, the time domain range of the third resource may be considered as a range of the duration starting from the reference slot position. For another example, the indication information of the third resource may include duration and a position of the initial transmission resource of the second PRS. In this case, the time domain range of the third resource may be considered as a range of the duration starting from the position of the initial transmission resource.

Optionally, the time domain range of the third resource may be used by the second device to determine the third resource. For example, the second device may perform resource selection in the time domain range of the third resource, to determine the third resource.

Based on this solution, the first device indicates, to the second device, the time domain range used by the second device to send the third PRS. In this way, a blind detection area of the first device can be limited, and blind detection complexity of the first device can be reduced.

(3) Information about the time domain resource of the third resource

The indication information of the third resource may include the information about the time domain resource of the third resource. For example, an index of a time domain resource unit of the third resource, for example, a slot number, may be included.

Based on this solution, the first device indicates, to the second device, the information about the time domain resource used by the second device to send the third PRS, to reduce complexity of the first device.

(4) Information about a frequency domain resource of the third resource

The indication information of the third resource may include the information about the frequency domain resource of the third resource. For example, an index of a frequency domain resource unit, for example, a subcarrier index, may be included.

In a possible case, the information about the frequency domain resource of the third resource may include one or more of a position of a resource element of the third PRS in frequency domain and an index of a subchannel for transmitting sidelink control information for scheduling the third PRS. The position of the resource element may be understood as a position of an initial transmission resource of the third PRS in frequency domain. Optionally, the position of the resource element is a position of the RE occupied by the sent PRS in a comb.

When the information about the frequency domain resource of the third resource includes the index of the subchannel for transmitting the sidelink control information for scheduling the third PRS, a frequency domain resource position of the third resource may be the same as a position indicated by the index of the subchannel.

Optionally, the frequency domain resource position of the third resource may be the same as or different from the frequency domain resource position of the first resource. Optionally, when the indication information of the third resource does not include the information about the frequency domain resource of the second resource, the frequency domain resource position of the third resource may be the same as the frequency domain resource position of the first resource.

Based on this solution, the first device indicates, to the second device, the frequency domain resource used by the second device to send the third PRS, to reduce complexity of the first device.

Optionally, the second information may further include request information. The request information may be used to request the second device to send the third PRS. In a possible case, when the second information includes the request information, the second indication information may indicate that the third resource exists, and the second information may include the indication information of the third resource. Optionally, when the second information includes the request information, the second indication information may alternatively indicate that the third resource does not exist.

In another possible case, when the second information does not include the request information, the second indication information may indicate that the third resource does not exist. In other words, when the first device does not request the second device to send the third PRS, the first device may not indicate, to the second device, the third resource for sending the third PRS, to save transmission resources.

It should be noted that the second indication information, the request information, and the indication information of the third resource may be indicated by using a same field, or may be indicated by using different fields. This is not specifically limited in this application.

In a possible case, the second information may further include one or more of the following information.

A. Reservation period of the second PRS

For example, when the second information indicates that the second resource exists, the second information may further include the reservation period of the second PRS.

B. Reservation period of the third PRS

For example, when the second information indicates that the third resource exists, the second information may further include the reservation period of the third PRS.

C. Priority of the second PRS

For example, when the second information indicates that the second resource exists, the second information may further include the priority of the second PRS.

D. Priority of the third PRS

For example, when the second information indicates that the third resource exists, the second information may further include the priority of the third PRS.

E. Identifier or source identifier of the first device

The second information may include the identifier or the source identifier of the first device. It may be understood that the identifier or the source identifier of the first device may be carried in the first information. The source identifier may be the same as a destination identifier used by the second device.

F. Identifier or destination identifier of the second device

The second information may include the identifier or the destination identifier of the second device. It may be understood that the identifier or the destination identifier of the second device may be carried in the first information. The destination identifier may be the same as the source identifier used by the second device.

G. Intra-group identifier of the second device

For example, when the second device belongs to a group, the second information may include an identifier of a group to which the terminal device belongs, and may further include an identifier used by the second device in the group.
S1: In an example, the second information may indicate that the second resource does not exist, that is, the sending resource of the terminal device 1 does not exist. It can be learned from FIG. 1 that the terminal device 1 sends the PRS 1 to the terminal device 2, and the terminal device 1 does not subsequently send the PRS to the terminal device 2.
In another example, the second information may include request information, and the request information indicates the terminal device 2 to send the PRS to the terminal device 1. The second information may further include indication information of the third resource. For implementation, refer to (1) to (4). Details are not described herein again. As shown in FIG. 1, the terminal device 2 may send the PRS 2 to the terminal device 1 on the third resource.
As shown in FIG. 2, the terminal device 1 may send the first information and the second information to the terminal device 2. The first information may indicate a resource of the PRS 1. The terminal device 1 may send the PRS 1 to the terminal device 2 on the resource of the PRS 1, and the terminal device 2 may receive the PRS 1 on the resource of the PRS 1. In an example, the second information may indicate that the second resource exists, that is, the sending resource of the terminal device 1 exists. The second information may further include indication information of the second resource. For implementations, refer to 1 to 4. Details are not described herein again. The terminal device 1 may send the PRS 2 to the terminal device 2 on the second resource.
In another example, the second information may include request information, and the request information indicates the terminal device 2 to send the PRS to the terminal device 1. The second information may further include indication information of the third resource. For implementation, refer to (1) to (4). Details are not described herein again. As shown in FIG. 1, the terminal device 2 may send the PRS 3 to the terminal device 1 on the third resource.
According to the foregoing solution, the first device may request transmission of the PRS from the second device, and indicate, to the second device, the third resource for sending the PRS, and the first device may also indicate, to the second device, a resource for sending the PRS next time. In this way, the PRS can be transmitted on the indicated resource, and resource conflicts are reduced. In addition, a sidelink positioning success rate can be improved, and sidelink positioning precision can be improved.
In a possible implementation, the first information may be carried in SCI and/or a MAC CE. Similarly, the second information may be carried in SCI or a MAC CE. For example, the SCI or the MAC CE may use one or more fields to indicate the first information and/or the second information. The field may be 1 bit, 2 bits, or more bits. This is not specifically limited in this application.

In a possible implementation, optionally, the SCI and/or the MAC CE that carry/carries the first information and/or the second information may be sent in a same slot or subframe together with the first PRS.

For example, the first information may be carried in SCI-1, and the second information may be carried in SCI-2. For another example, the first information and the second information may be carried in same SCI, for example, SCI-1 or SCI-2. It may be understood that the first information and the second information may alternatively be carried in a same MAC CE, or may be carried in two different MAC CEs. This is not specifically limited in this application.

S1102: The first device sends the first PRS to the second device on the first resource.

Correspondingly, the second device receives the first PRS from the first device on the first resource.

In a possible implementation, if the second information indicates that the second resource exists, the embodiment shown in FIG. 11 may further include the following operation S1103.

S1103: The first device sends a second PRS to the second device on the second resource.

Correspondingly, the second device receives the second PRS from the first device on the second resource.

In another possible implementation, if the second information includes request information, the embodiment shown in FIG. 11 may further include the following operation S1104.

S1104: The second device sends a third PRS to the first device.

Correspondingly, the first device receives the third PRS from the second device.

In a possible case, if the second information indicates that the third resource exists, and the second information includes indication information of the third resource, the second device may send the third PRS to the first device on the third resource. If the indication information of the third resource includes a time domain range of the third resource, the second device may perform resource selection in the time domain range, to determine the third resource.

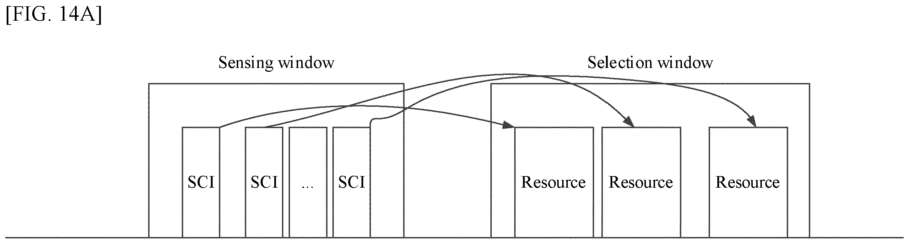

For example, the second device listens to a resource selection status in a sensing window, and excludes, in a selection window, a reserved resource occupied by or corresponding to sensed data. Refer to FIG. 14A. The second device may listen to SCI sent by another device, for example, the first device or a third device, determine an occupied or reserved resource based on a resource indicated by the SCI, and exclude a corresponding resource from the time domain range. After excluding the occupied or reserved resource in the selection window, the second device may determine the third resource in the selection window. Optionally, when an RSRP corresponding to the received SCI is greater than or equal to a preset threshold, the second device may exclude, in the time domain range, the resource indicated by the SCI. Optionally, the RSRP corresponding to the SCI may be obtained through measurement based on a DMRS on a PSCCH, or may be obtained through measurement based on a DMRS on a PSSCH.

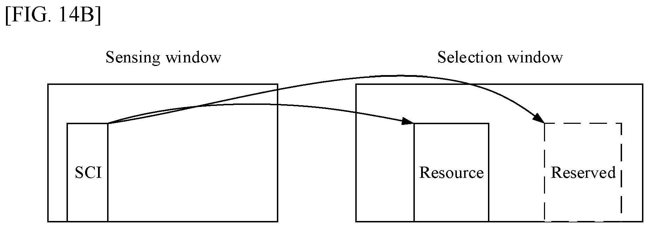

Refer to FIG. 14B. If the detected SCI indicates a reservation period, the second device may further exclude a reserved resource corresponding to an occupied resource.

For the selection window and sensing window, refer to related description in FIG. 9.

In another possible case, the second device may autonomously perform resource selection, and send the third PRS on a candidate resource. For example, the second device may determine the candidate resource based on the second resource and/or the third resource and the first resource.

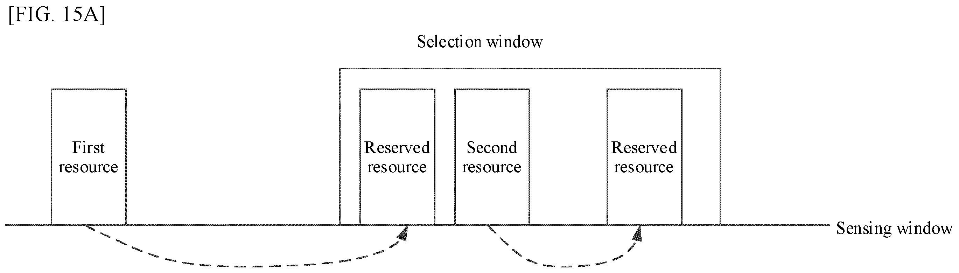

For example, refer to FIG. 15A. When the second information indicates that the second resource exists, the second device may exclude the second resource and a reserved resource corresponding to the first resource in the selection window. In this case, the candidate resource may be a resource excluding the second resource and the reserved resource corresponding to the first resource in the selection window. Optionally, the second device may exclude the reserved resource corresponding to the second resource in the selection window. In this case, the candidate resource may be a resource excluding, in a resource window, the second resource, the reserved resource corresponding to the second resource, and the reserved resource corresponding to the first resource.

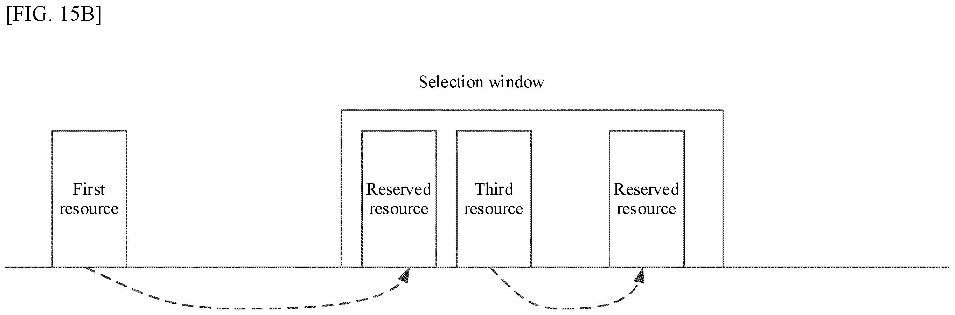

For another example, refer to FIG. 15B. When the second information indicates that the third resource exists, the second device may exclude the third resource and the reserved resource corresponding to the first resource in the selection window. In this case, the candidate resource may be a resource excluding the third resource and the reserved resource corresponding to the first resource in the selection window. Optionally, the second device may exclude the reserved resource corresponding to the third resource in the selection window. In this case, the candidate resource may be a resource excluding, in the resource window, the third resource, the reserved resource corresponding to the third resource, and the reserved resource corresponding to the first resource.

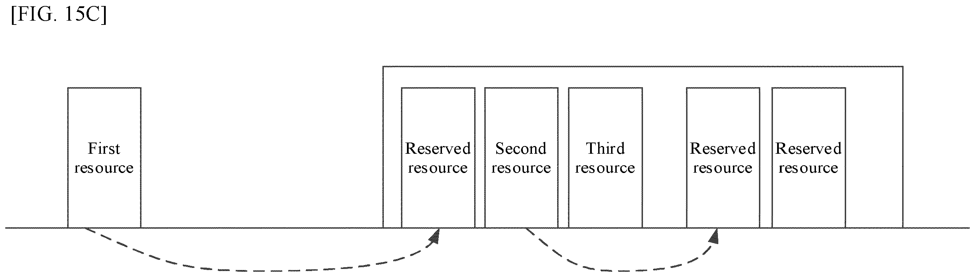

For another example, refer to FIG. 15C. When the second information indicates that the second resource and the third resource exist, the second device may exclude, in the selection window, the second resource, the third resource, and the reserved resource corresponding to the first resource. In this case, the candidate resource may be a resource excluding, in the selection window, the second resource, the third resource, and the reserved resource corresponding to the first resource. Optionally, the second device may exclude, in the selection window, the reserved resource corresponding to the second resource and the reserved resource corresponding to the third resource. In this case, the candidate resource may be a resource excluding, in the resource window, the second resource, the reserved resource corresponding to the second resource, the third resource, the reserved resource corresponding to the third resource, and the reserved resource corresponding to the first resource.

It may be understood that, if the indication information of the second resource includes a time domain range of the second resource, the second device may exclude the time domain range of the second resource in the selection window. Similarly, if the indication information of the third resource includes a time domain range of the third resource, the second device may exclude the time domain range of the third resource in the selection window.

In this specification, the second device may select one or more resources from candidate resources to send the third PRS. In a possible case, when the third PRS is sent, the source identifier used by the second device may be the same as the destination identifier used by the first device, and the destination identifier used by the second device may be the same as the source identifier used by the first device.

Based on the foregoing solution, the second device may send the third PRS on the resource indicated by the first device or autonomously select a resource to send the third PRS. When autonomously selecting a resource, the second device may exclude a resource that is reserved by the first device and that is to be used for next transmission. This can reduce a possibility of resource collision, and improve a sidelink positioning success rate.

Currently, a device other than the first device and the second device, for example, the third device, may exist in the system. When the first device and the second device perform sidelink positioning, if the third device wants to transmit data, the third device needs to perform resource selection, to reduce a possibility of resource collision. However, in current resource selection, only a reserved resource corresponding to a detected actually used resource can be excluded. Therefore, there is still a high probability of a resource conflict.

In view of this, an embodiment of this application provides an information transmission method. In the method, the third device may exclude a reserved resource corresponding to an actually used resource, and the third device may further exclude a resource reserved by another device, for example, the first device and the second device, for next transmission and a corresponding reserved resource. Therefore, a possibility of a resource conflict can be reduced.

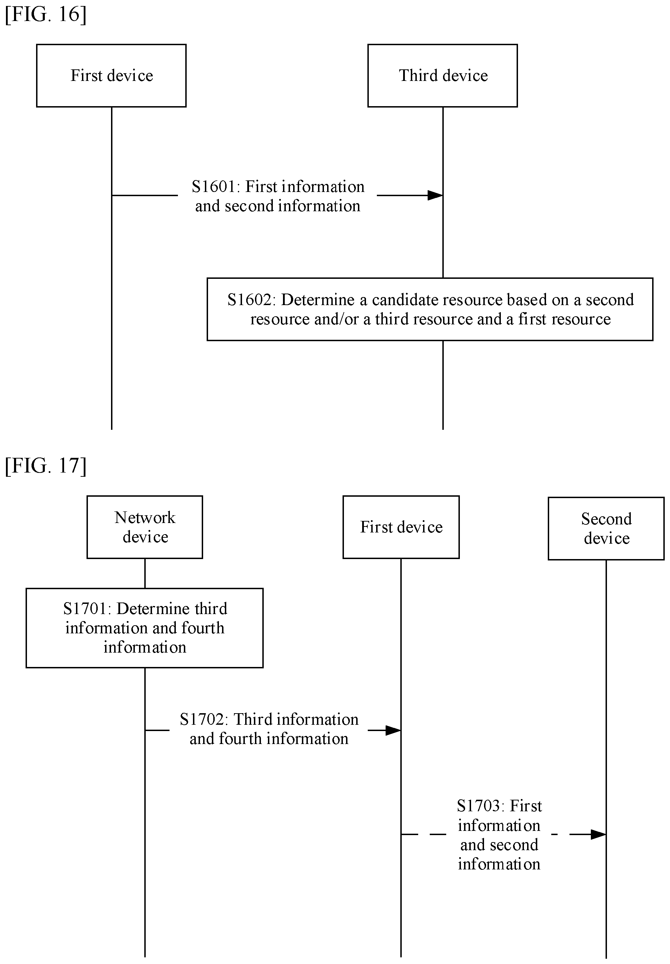

FIG. 16 is an example flowchart of an information transmission method according to an embodiment of this application. The method may include the following operations.

S1601: A third device receives, in a sensing window, first information and second information that are sent by a first device.

The first information may indicate a first resource for sending a first PRS by the first device, the second information indicates a second resource for sending a second PRS by the first device, and/or the second information indicates a third resource for sending a third PRS by a second device. For description of the first information and the second information, refer to the embodiment shown in FIG. 11. Details are not described herein again.

S1602: The third device determines a candidate resource based on the second resource and/or the third resource and the first resource.

In an example, when the second information indicates that the second resource exists, the third device may exclude the second resource and a reserved resource corresponding to the first resource in a selection window. In this case, the candidate resource may be a resource excluding the second resource and the reserved resource corresponding to the first resource in the selection window. Optionally, the third device may exclude a reserved resource corresponding to the second resource in the selection window. In this case, the candidate resource may be a resource excluding, in a resource window, the second resource, the reserved resource corresponding to the second resource, and the reserved resource corresponding to the first resource.

In another example, when the second information indicates that the third resource exists, the third device may exclude the third resource and the reserved resource corresponding to the first resource in the selection window. In this case, the candidate resource may be a resource excluding the third resource and the reserved resource corresponding to the first resource in the selection window. Optionally, the third device may exclude a reserved resource corresponding to the third resource in the selection window. In this case, the candidate resource may be a resource excluding, in the resource window, the third resource, the reserved resource corresponding to the third resource, and the reserved resource corresponding to the first resource.

In still another example, when the second information indicates that the second resource and the third resource exist, the third device may exclude, in the selection window, the second resource, the third resource, and the reserved resource corresponding to the first resource. In this case, the candidate resource may be a resource excluding, in the selection window, the second resource, the third resource, and the reserved resource corresponding to the first resource. Optionally, the third device may exclude, in the selection window, the reserved resource corresponding to the second resource and the reserved resource corresponding to the third resource. In this case, the candidate resource may be a resource excluding, in the resource window, the second resource, the reserved resource corresponding to the second resource, the third resource, the reserved resource corresponding to the third resource, and the reserved resource corresponding to the first resource.

It may be understood that, if indication information of the second resource includes a time domain range of the second resource, the third device may exclude the time domain range of the second resource in the selection window. Similarly, if indication information of the third resource includes a time domain range of the third resource, the third device may exclude the time domain range of the third resource in the selection window.

In a possible implementation, the third device may exclude the second resource and/or the third resource in the selection window based on first signaling. The first signaling may be sent by the first device, or may be sent by a network device. The first signaling may indicate that the second resource and/or the third resource are/is reserved resources/a reserved resource. In other words, the first signaling may indicate that the second resource and/or the third resource are/is not recommended resources/a recommended resource. In this way, when the first signaling indicates that the second resource and/or the third resource are/is reserved resources/a reserved resource, the third device can exclude the second resource and/or the third resource in the selection window, to reduce a waste of resources and reduce a possibility of a resource conflict.

In this embodiment of this application, the first information and the second information in the embodiment shown in FIG. 11 may be determined based on information indicated by the network device. FIG. 17 is an information transmission method according to an embodiment of this application. The method may include the following operations. It may be understood that the embodiment shown in FIG. 17 may be separately implemented, or may be implemented in combination with the embodiment shown in FIG. 11. This is not specifically limited in this application.

S1701: A network device determines third information and fourth information.

S1702: The network device sends the third information and the fourth information to a first device.

Correspondingly, the first device receives the third information and the fourth information from the network device.

For example, the network device may send the third information and the fourth information to the first device by using control information such as DCI. Optionally, CRC of the DCI may be scrambled by using a sidelink positioning-related radio network temporary identifier (radio network temporary identifier, RNTI).

Optionally, the network device may alternatively send the third information and the fourth information to the first device by using a SIB1 or an RRC message.

The third information may indicate a fourth resource for sending a first SL-PRS by the first device. The fourth information may indicate a fifth resource for sending a second SL-PRS by the first device, and/or the fourth information may indicate a sixth resource for sending a third SL-PRS by a second device.

For example, the third information may include at least one of a sequence parameter of the first PRS, time domain resource information of the fourth resource, and frequency domain resource information of the fourth resource. Similarly, the fourth information may include at least one of a sequence parameter of the second PRS, time domain resource information of the fifth resource, and frequency domain resource information of the fifth resource. For another example, the fourth information may include at least one of a sequence parameter of the third PRS, time domain resource information of the sixth resource, and frequency domain resource information of the sixth resource. Optionally, the sequence parameter includes a random number for generating an initial value of a sequence, an index of an orthogonal sequence, and the like. Optionally, the sequence is a Gold sequence.

For another example, the third information includes information about a time-frequency resource of a PSCCH for carrying the first SL-PRS. Similarly, the fourth information may include information about a time-frequency resource of a PSCCH for carrying the second SL-PRS; and/or the fourth information may include information about a time-frequency resource of a PSCCH for carrying the third SL-PRS.

It may be understood that, for the third information, refer to related description of the first information in the embodiment shown in FIG. 11, and for the fourth information, refer to related description of the second information in the embodiment shown in FIG. 11. For the fourth resource indicated by the third information, refer to the foregoing related description of the first resource indicated by the first information. For the fifth resource indicated by the fourth information, refer to the foregoing related description of the second resource indicated by the second information. For the sixth resource indicated by the fourth information, refer to the foregoing related description of the third resource indicated by the second information. Details are not described herein again.

In a possible implementation, the network device may further send fifth information to the first device. The fifth information may indicate an unavailable resource. For example, the fifth information may indicate that the fourth resource, the fifth resource, and the sixth resource are unavailable resources. Alternatively, the fifth information may indicate that a seventh resource is an unavailable resource. Based on this solution, the network device indicates, to the first device, an unavailable resource, that is, indicates a resource that cannot be used for transmission. It is equivalent to performing an interference avoidance operation, and the first device can free up the resource and does not use it for transmission, thereby reducing interference between positioning resources between users.

Optionally, the embodiment shown in FIG. 17 may further include the following operation S1703.

S1703: The first device sends first information and second information to the second device.

Correspondingly, the second device receives the first information and the second information from the first device.

It may be understood that, for implementation of S1703, refer to S1101. Details are not described herein again.

In a possible case, the first information may be determined based on the third information. For example, when the third information indicates the fourth resource, a first resource indicated by the first information may be the same as the fourth resource. Alternatively, when the third information indicates the fourth resource, and the fifth information indicates that the fourth resource is an unavailable resource, a first resource indicated by the first information is different from the fourth resource.

In another possible case, the second information may be determined based on the fourth information. For example, when the fourth information indicates the fifth resource, a second resource indicated by the second information may be the same as the fifth resource. Alternatively, when the fourth information indicates the fifth resource, and the fifth information indicates that the fifth resource is an unavailable resource, a second resource indicated by the first information is different from the fifth resource. For another example, when the fourth information indicates the sixth resource, a third resource indicated by the second information may be the same as the sixth resource. Alternatively, when the fourth information indicates the sixth resource, and the fifth information indicates that the sixth resource is an unavailable resource, a third resource indicated by the second information may be different from the sixth resource.

Based on the foregoing solution, the network device indicates the sidelink positioning resource used by the first device and/or the sidelink positioning resource used by the second device. Therefore, when a network is available, sidelink positioning resources can be allocated to different devices based on a network deployment requirement, thereby maximizing network resource allocation and utilization efficiency, and improving system and network performance.

In this embodiment of this application, if an anchor device and a target device have different timing, a timing offset is introduced into a sidelink positioning algorithm. This affects sidelink positioning precision. In view of this, an embodiment of this application provides still another information transmission method. In the method, the first device may indicate related information of a synchronization source to the second device. When a synchronization source of the second device is the same as the synchronization source of the first device, the second device can measure a PRS sent by the first device or send a PRS to the first device. In this way, terminal devices participating in sidelink positioning can be limited to use a same synchronization source, the timing offset can be reduced, and sidelink positioning precision can be improved.

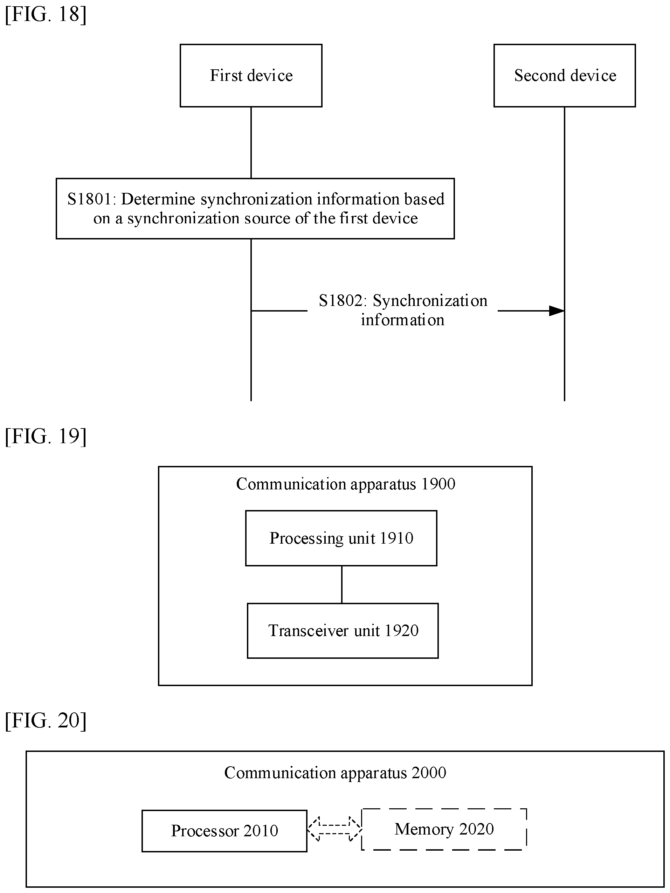

FIG. 18 is an example flowchart of an information transmission method according to an embodiment of this application. The method may include the following operations.

S1801: A first device determines synchronization information based on a synchronization source of the first device.

In a possible case, the synchronization information may indicate related information of the synchronization source of the first device, or may indicate information about a synchronization source of a second device, or may indicate required synchronization information.

S1802: The first device sends the synchronization information to the second device.

Correspondingly, the second device receives the synchronization information from the first device.

**In** a possible implementation, the synchronization information may indicate a type and/or an identifier of the synchronization source. The type of the synchronization source may include a satellite, a network device, or a terminal device.

For example, the type of the synchronization source may include a satellite, and the synchronization information may be the satellite and/or an identifier of the satellite. For another example, the type of the synchronization source may include a network device, and the synchronization information may indicate the network device and/or an identifier of the network device. For another example, the type of the synchronization source may include a terminal device, and the synchronization information may indicate the terminal device and/or an identifier of the terminal device.

It may be understood that the synchronization source of the first device may be configured in a resource pool, or may be indicated by the network device to the first device. After determining the synchronization source of the first device, the first device may send the synchronization information to the second device. In an example, the first device may send the synchronization information to the second device by using SCI, a MAC CE, or PC5 RRC. PC5 is another name of a connection or an interface between terminal devices on a sidelink. In another example, the first device sends the synchronization information to the second device by using a positioning request message, a positioning assistance message, a positioning response message, or a positioning measurement report.

The following describes information included in the synchronization information.

In an embodiment, the synchronization information may further include hop count indication information. The hop count indication information may indicate a hop count during synchronization to the synchronization source. For example, the synchronization information indicates that the type of the synchronization source includes a network device, and the hop count indication information may indicate a hop count during synchronization to the network device. For example, synchronization to the network device is in a one-hop manner (that is, direct synchronization to the network device), or synchronization to the network device is in a two-hop manner (indirect synchronization to the network device in a one-time forwarding manner), or synchronization to the network device is in a more-hop manner (indirect synchronization to the network device in a two-time or more-time forwarding manner)

For another example, the synchronization information indicates that the type of the synchronization source includes a satellite, and the hop count indication information may indicate a hop count during synchronization to the satellite. For example, synchronization to the satellite is in a one-hop manner (that is, direct synchronization to the satellite), or synchronization to the satellite is in a two-hop manner (indirect synchronization to the satellite in a one-time forwarding manner), or synchronization to the satellite is in a more-hop manner.

For another example, the synchronization information indicates that the type of the synchronization source includes a terminal device, and the hop count indication information may indicate a hop count during synchronization to the terminal device. For example, synchronization to the terminal device is in a one-hop manner, or synchronization to the terminal device is in a two-hop manner, or synchronization to the terminal device is in a more-hop manner.

Optionally, the hop count indication information may be 1-bit information, 2-bit information, or information of more bits. This is not specifically limited in this application.

Based on this solution, the synchronization sources of the first device and the second device or synchronization sources of an anchor device and a target device that participate in positioning can be aligned. When a device whose type of a synchronization source is the terminal device is selected, devices that have synchronization sources with a same hop count are selected, thereby avoiding a timing offset caused by selection of devices with different hop counts.

In another embodiment, when the synchronization information indicates that the type of the synchronization source includes a network device, the synchronization information may further include an operator identifier. Chinese mainland is used as an example. Corresponding operator identifiers include: China Mobile Communications Group Co., Ltd. (China mobile communications group co, CMCC), China Telecom (China telecom, CTC), China Unicom (China unicom company, CUC), and China Broadcasting Network Group Corporation Ltd. (China broadcast network, CBN), and the like. Optionally, information about an operator in another region or country may be correspondingly defined, or may be configured by using configuration information. A quantity of bits indicate the operator identifier. For example, 2 bits, 3 bits, or more bits may indicate the operator identifier. This is not specifically limited in this application.

In a possible case, the first device may obtain configuration information of an operator identifier list of the network device, and determine the operator identifier corresponding to the synchronization source. Optionally, the configuration information of the operator identifier list may be obtained by using a system message or an RRC message. For example, the network device accessed by the first device may send the configuration information of the operator identifier list to the first device by using a system message or an RRC message.

Based on this solution, because networks of different operators may not be synchronized, network devices of a same operator may be selected, based on information indicating the operator, as synchronization sources of a target device and an anchor device that participate in positioning, thereby avoiding an additional timing offset caused by selection of different operators.

In another embodiment, when the synchronization information indicates that the type of the synchronization source includes a network device, the synchronization information may further include an identifier of a physical cell managed by the network device. For example, the identifier of the physical cell may be indicated by using 2 bits, 10 bits, or more bits. For example, a value of the identifier of the physical cell may range from 0 to 1007.

Based on this solution, because networks of a same operator are synchronized to different network devices, and there may still be a large timing offset, for example, network devices are not synchronized, or timing offset (TA) values are different, a same network device of a same operator may be selected as synchronization sources of a target device and an anchor device that participate in positioning, thereby avoiding an additional timing offset caused by selection of different network devices of different operators.

In a possible case, the synchronization information may further indicate whether networks of a public land mobile network (public land mobile network, PLMN) are synchronized. For example, K bitmaps (bit map) may indicate whether networks of the PLMN are synchronized. For example, if there are four operators, four bits are used. When a bit value corresponding to each operator is 0, it indicates that networks of a PLMN of the operator are not synchronized; or when a bit value corresponding to each operator is 1, it indicates that networks of a PLMN of the operator are synchronized.

Optionally, when the synchronization information indicates whether networks of the PLMNs are synchronized, the second device further carries a physical cell identifier (physical cell identifier, PCID) and indication information of a corresponding TA value between cells in the positioning measurement report.

Based on this solution, if network devices in networks of a same operator are synchronized, same or different network devices of the same operator can be selected as synchronization sources of a target device and an anchor device that participate in positioning. In this way, a timing offset is avoided, and more synchronization source selections can be provided for the devices.

In a possible case, the synchronization information may be carried in a higher layer message. For example, the synchronization information may be included in physical layer signaling, or may be included in higher layer signaling. Based on this solution, the synchronization information is exchanged at a higher layer, to help control and reduce overheads of physical layer signaling. This solution is particularly suitable for a connected (for example, unicast) scenario, and can transmit more assistance information to a related device that performs sidelink positioning.

In another possible case, the synchronization information may be included in capability exchange information between a target device and an anchor device, or may be included in positioning request information, or may be included in positioning response information, or may be included in measurement report information, or may be included in the first information and/or the second information in the embodiment shown in FIG. 11. This is not specifically limited in this application.

In a possible case, the embodiment shown in FIG. 13 may be implemented in combination with any one of the embodiments shown in FIG. 11 and FIG. 17, or may be implemented separately. This is not specifically limited in this application. For example, the embodiment shown in FIG. 18 may be combined with the embodiment shown in FIG. 11.

For example, when the second device is an anchor device, the first device may send the first information and the second information to the second device, and the first device may send the synchronization information to the second device. Only when the synchronization source of the second device is the same as the synchronization source indicated by the synchronization information, the second device can be used as an anchor device of the first device, and the second device can send a third PRS to the first device, and/or the second device can send a positioning measurement report to the first device.

Based on this solution, the anchor device can determine, based on the type of the synchronization source of the first device, whether the first device can be a target device and whether to send the positioning measurement report to the target device. Therefore, from a perspective of timing, the target device can be helped to determine a truly effective anchor device, thereby avoiding, from the source, a timing offset caused by selecting an inappropriate anchor device, and avoiding impact on positioning precision.

For another example, when the second device is a target device, the first device may send the synchronization information to the second device. Only when the synchronization source of the second device is the same as the synchronization source indicated by the synchronization information, the second device can use the first device as an auxiliary device, and the second device can determine a positioning report based on a first PRS sent by the first device. The target device calculates a position of the target device based on the positioning measurement report, or the target device may send the obtained measurement report to a positioning server.

Based on this solution, the target device determines, based on the type of the synchronization source of the first device, whether the first device can be an anchor device of the target device. Therefore, from a perspective of timing, the target device can be helped to determine a truly effective anchor device, thereby avoiding, from the source, a timing offset caused by selecting an inappropriate anchor device, and avoiding impact on positioning precision.

The following describes a communication apparatus for implementing the foregoing method in embodiments of this application with reference to the accompanying drawings. Therefore, all the foregoing content may be used in the following embodiments. Repeated content is not described again.

FIG. 19 is a block diagram of a communication apparatus 1900 according to an embodiment of this application. The communication apparatus 1900 may correspondingly implement functions or steps implemented by the first device, the second device, the third device, or the network device in the foregoing method embodiments. The communication apparatus may include a processing unit 1910 and a transceiver unit 1920. Optionally, the communication apparatus may further include a storage unit. The storage unit may be configured to store instructions (code or a program) and/or data. The processing unit 1910 and the transceiver unit 1920 may be coupled to the storage unit. For example, the processing unit 1910 may read the instructions (the code or the program) and/or the data in the storage unit, to implement a corresponding method. The foregoing units may be disposed independently, or may be partially or completely integrated.

In some possible implementations, the communication apparatus 1900 can correspondingly implement the behavior and functions of the first device in the foregoing method embodiments. For example, the communication apparatus 1900 may be the first device, or may be a component (for example, a chip or a circuit) used in the first device. The transceiver unit 1920 may be configured to perform all receiving or sending operations performed by the first device in the embodiment shown in FIG. 11, for example, S1101 in the embodiment shown in FIG. 11, and/or configured to support another process of the technology described in this specification. The processing unit 1910 is configured to perform all operations other than the receiving or sending operations performed by the first device in the embodiment shown in FIG. 11, and/or configured to support another process of the technology described in this specification.

The processing unit 1910 is configured to determine first information and second information. The transceiver unit 1920 is configured to send the first information and the second information to the second device. The first information indicates a first resource for sending a first positioning reference signal PRS, and the second information indicates whether a second resource exists and/or the second information indicates whether a third resource exists. The second resource is used by the communication apparatus to send a second PRS, and the third resource is used by the second device to send a third PRS. The transceiver unit 1920 is further configured to send the first PRS to the second device on the first resource, where the first PRS is used for sidelink positioning.

In some possible implementations, the communication apparatus 1900 can correspondingly implement the behavior and functions of the first device in the foregoing method embodiments. For example, the communication apparatus 1900 may be the first device, or may be a component (for example, a chip or a circuit) used in the first device. The transceiver unit 1920 may be configured to perform all receiving or sending operations performed by the terminal device in the embodiment shown in FIG. 18, for example, S 1802 in the embodiment shown in FIG. 18, and/or configured to support another process of the technology described in this specification. The processing unit 1910 is configured to perform all operations other than the receiving or sending operations performed by the first device in the embodiment shown in FIG. 18, for example, S1801 in the embodiment shown in FIG. 18, and/or configured to support another process of the technology described in this specification.

The processing unit 1910 is configured to determine synchronization information based on a synchronization source of the communication apparatus. The synchronization information indicates a type and/or an identifier of the synchronization source. The type of the synchronization source includes one of the following: a satellite, a network device, or a terminal device. The transceiver unit 1920 is configured to send the synchronization information to the second device, where the synchronization information is used by the second device to generate a positioning measurement report.

In some possible implementations, the communication apparatus 1900 can correspondingly implement the behavior and functions of the first device in the foregoing method embodiments. For example, the communication apparatus 1900 may be the first device, or may be a component (for example, a chip or a circuit) used in the first device. The transceiver unit 1920 may be configured to perform all receiving or sending operations performed by the terminal device in the embodiment shown in FIG. 17, for example, S 1702 in the embodiment shown in FIG. 17, and/or configured to support another process of the technology described in this specification. The processing unit 1910 is configured to perform all operations other than the receiving or sending operations performed by the first device in the embodiment shown in FIG. 17, and/or configured to support another process of the technology described in this specification.

The transceiver unit 1920 is configured to receive third information and fourth information from a network device. The third information indicates a fourth resource for sending a first sidelink positioning reference signal SL-PRS by the communication apparatus, and the fourth information indicates a fifth resource and/or the fourth information indicates a sixth resource. The fifth resource is used by the communication apparatus to send a second SL-PRS resource, and the sixth resource is used by a second device to send a third SL-PRS resource. The processing unit 1910 is configured to determine the fifth resource and/or the sixth resource and the fourth resource based on the third information and the fourth information. The transceiver unit 1920 is further configured to: send the second PRS to the second device and/or receive the third PRS and send the first PRS.

In some possible implementations, the communication apparatus 1900 can correspondingly implement the behavior and functions of the second device in the foregoing method embodiments. For example, the communication apparatus 1900 may be the second device, or may be a component (for example, a chip or a circuit) used in the second device. The transceiver unit 1920 may be configured to perform all receiving or sending operations performed by the second device in the embodiment shown in FIG. 11, for example, S1101 in the embodiment shown in FIG. 11, and/or configured to support another process of the technology described in this specification. The processing unit 1910 is configured to perform all operations other than the receiving or sending operations performed by the second device in the embodiment shown in FIG. 11, and/or configured to support another process of the technology described in this specification.

The transceiver unit 1920 is configured to receive first information and second information from the first device. The first information indicates a first resource for sending a first positioning reference signal PRS, and the second information indicates whether a second resource exists and/or the second information indicates whether a third resource exists. The second resource is used by the first device to send a second PRS, and the third resource is used by the communication apparatus to send a third PRS. The processing unit 1910 is configured to determine the first resource. The transceiver unit 1920 is further configured to receive the first PRS from the first device on the first resource, where the first PRS is used for sidelink positioning.

In some possible implementations, the communication apparatus 1900 can correspondingly implement the behavior and functions of the second device in the foregoing method embodiments. For example, the communication apparatus 1900 may be the second device, or may be a component (for example, a chip or a circuit) used in the second device. The transceiver unit 1920 may be configured to perform all receiving or sending operations performed by the second device in the embodiment shown in FIG. 18, for example, S1802 in the embodiment shown in FIG. 18, and/or configured to support another process of the technology described in this specification. The processing unit 1910 is configured to perform all operations other than the receiving or sending operations performed by the second device in the embodiment shown in FIG. 18, and/or configured to support another process of the technology described in this specification.

The transceiver unit 1920 is configured to receive synchronization information from the first device. The synchronization information indicates a type and/or an identifier of a synchronization source. The type of the synchronization source includes one of the following: a satellite, a network device, or a terminal device. The processing unit 1910 is configured to generate a positioning measurement report based on the synchronization information.

In some possible implementations, the communication apparatus 1900 can correspondingly implement the behavior and functions of the third device in the foregoing method embodiments. For example, the communication apparatus 1900 may be the third device, or may be a component (for example, a chip or a circuit) used in the third device. The transceiver unit 1920 may be configured to perform all receiving or sending operations performed by the third device in the embodiment shown in FIG. 16, for example, S1601 in the embodiment shown in FIG. 16, and/or configured to support another process of the technology described in this specification. The processing unit 1910 is configured to perform all operations other than the receiving or sending operations performed by the third device in the embodiment shown in FIG. 16, for example, S1602 in the embodiment shown in FIG. 16, and/or configured to support another process of the technology described in this specification.

The transceiver unit 1920 is configured to receive, in a sensing window, first information and second information that are sent by the first device. The first information indicates a first resource for sending a first positioning reference signal PRS by the first device, the second information indicates a second resource for sending a second PRS by the first device, and/or the second information indicates a third resource for sending a third PRS by the second device. The processing unit 1910 is configured to determine a candidate resource based on the second resource and/or the third resource and the first resource.

In some possible implementations, the communication apparatus 1900 can correspondingly implement the behavior and functions of the network device in the foregoing method embodiments. For example, the communication apparatus 1900 may be the network device, or may be a component (for example, a chip or a circuit) used in the network device. The transceiver unit 1920 may be configured to perform all receiving or sending operations performed by the network device in the embodiment shown in FIG. 17, for example, S1702 in the embodiment shown in FIG. 17, and/or configured to support another process of the technology described in this specification. The processing unit 1910 is configured to perform all operations other than the receiving or sending operations performed by the network device in the embodiment shown in FIG. 17, for example, S1601 in the embodiment shown in FIG. 17, and/or configured to support another process of the technology described in this specification.

The processing unit 1910 is configured to determine third information and fourth information, where the third information indicates a fourth resource for sending a first sidelink positioning reference signal SL-PRS by the first device, and the fourth information indicates a fifth resource and/or the fourth information indicates a sixth resource. The fifth resource is used by the first device to send a second SL-PRS, and the sixth resource is used by a second device to send a third SL-PRS. The transceiver unit 1920 is configured to send the third information and the fourth information to the first device.

For operations performed by the processing unit 1910 and the transceiver unit 1920, refer to the related description of the foregoing method embodiments.

It should be understood that the processing unit 1910 in this embodiment of this application may be implemented by a processor or a processor-related circuit component, and the transceiver unit 1920 may be implemented by a transceiver, a transceiver-related circuit component, or a communication interface.

Based on a same concept, as shown in FIG. 20, an embodiment of this application provides a communication apparatus 2000. The communication apparatus 2000 includes a processor 2010. Optionally, the communication apparatus 2000 may further include a memory 2020, configured to store instructions executed by the processor 2010, or store input data required by the processor 2010 to run the instructions, or store data generated after the processor 2010 runs the instruction. The processor 2010 may implement the methods shown in the foregoing method embodiments by using the instructions stored in the memory 2020.

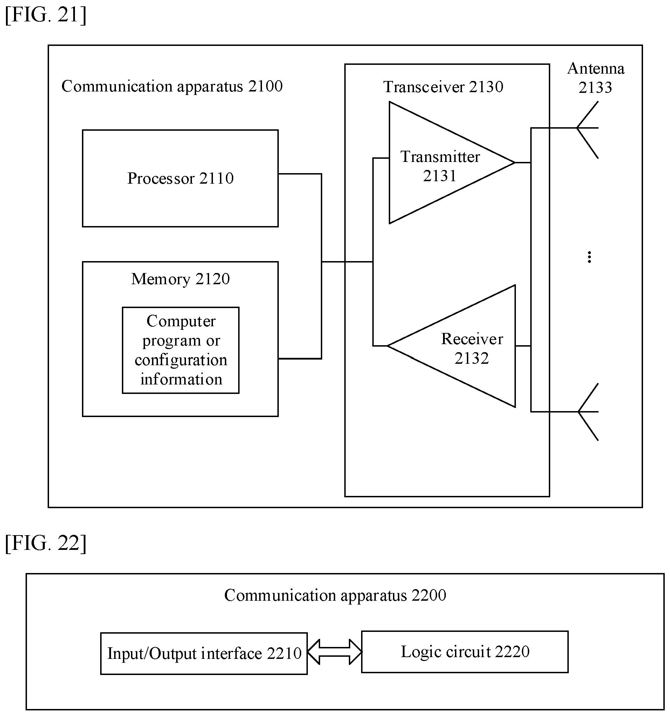

Based on a same concept, as shown in FIG. 21, an embodiment of this application provides a communication apparatus 2100. The communication apparatus 2100 may be a chip or a chip system. Optionally, in this embodiment of this application, the chip system may include a chip, or may include a chip and another discrete component.

The communication apparatus 2100 may include at least one processor 2110. The processor 2110 is coupled to a memory. Optionally, the memory may be located inside the apparatus, or may be located outside the apparatus. For example, the communication apparatus 2100 may further include at least one memory 2120. The memory 2120 stores a necessary computer program, configuration information, a computer program or instructions, and/or data for implementing any one of the foregoing embodiments. The processor 2110 may execute the computer program stored in the memory 2120, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 2110 may cooperate with the memory 2120. A specific connection medium between the transceiver 2130, the processor 2110, and the memory 2120 is not limited in this embodiment of this application.

The communication apparatus 2100 may further include a transceiver 2130, and the communication apparatus 2100 may perform information exchange with another device by using the transceiver 2130. The transceiver 2130 may be a circuit, a bus, a transceiver, or any other apparatus that may be configured to exchange information, or is referred to as a signal transceiver unit. As shown in FIG. 21, the transceiver 2130 includes a transmitter 2131, a receiver 2132, and an antenna 2133. In addition, when the communication apparatus 2100 is a chip-type apparatus or a circuit, the transceiver in the communication apparatus 2100 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 2100 may be used in a first device. Specifically, the communication apparatus 2100 may be the first device, or may be an apparatus that can support a terminal device in implementing functions of the first device in any one of the foregoing embodiments. The memory 2120 stores a necessary computer program, a computer program or instructions, and/or data for implementing functions of the first device in any one of the foregoing embodiments. The processor 2110 may execute the computer program stored in the memory 2120, to complete the method performed by the first device in any one of the foregoing embodiments.

In a possible implementation, the communication apparatus 2100 may be used in a second device. Specifically, the communication apparatus 2100 may be the second device, or may be an apparatus that can support a terminal device in implementing functions of the second device in any one of the foregoing embodiments. The memory 2120 stores a necessary computer program, a computer program or instructions, and/or data for implementing functions of the second device in any one of the foregoing embodiments. The processor 2110 may execute the computer program stored in the memory 2120, to complete the method performed by the second device in any one of the foregoing embodiments.

In a possible implementation, the communication apparatus 2100 may be used in a third device. Specifically, the communication apparatus 2100 may be the third device, or may be an apparatus that can support a terminal device in implementing functions of the third device in any one of the foregoing embodiments. The memory 2120 stores a necessary computer program, a computer program or instructions, and/or data for implementing functions of the third device in any one of the foregoing embodiments. The processor 2110 may execute the computer program stored in the memory 2120, to complete the method performed by the third device in any one of the foregoing embodiments.

In a possible implementation, the communication apparatus 2100 may be used in a network device. Specifically, the communication apparatus 2100 may be the network device, or may be an apparatus that can support the network device in implementing functions of the network device in any one of the foregoing embodiments. The memory 2120 stores a necessary computer program, a computer program or instructions, and/or data for implementing functions of the network device in any one of the foregoing embodiments. The processor 2110 may execute the computer program stored in the memory 2120, to complete the method performed by the network device in any one of the foregoing embodiments.

The communication apparatus 2100 provided in this embodiment may be used in the first device to complete the method performed by the first device, or the communication apparatus 2100 provided in this embodiment may be used in the second device to complete the method performed by the second device, or the communication apparatus 2100 provided in this embodiment may be used in the third device to complete the method performed by the third device, or may be used in the network device to complete the method performed by the network device. Therefore, for technical effect that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the memory may be any other medium that can be configured to carry or store expected program code in a form of instructions or a data structure and that can be accessed by a computer, but is not limited thereto. The memory in this embodiment of this application may alternatively be a circuit or any other apparatus that can implement a storage function, and is configured to store a computer program, a computer program or instructions, and/or data.

Refer to FIG. 22. Based on the foregoing embodiments, an embodiment of this application further provides another communication apparatus 2200, including an input/output interface 2210 and a logic circuit 2220. The input/output interface 2210 is configured to receive code instructions and transmit the code instructions to the logic circuit 2220. The logic circuit 2220 is configured to run the code instructions to perform the method performed by the terminal device or the network device in any one of the foregoing embodiments.

The following describes in detail operations performed by the communication apparatus used in the terminal device or the network device.

In an optional implementation, the communication apparatus 2200 may be used in a first device to perform the method performed by the terminal device, specifically, for example, the method performed by the first device in the embodiment shown in FIG. 11.

The logic circuit 2220 is configured to determine first information and second information. The input/output interface 2210 is configured to output the first information and the second information to a second device. The first information indicates a first resource for sending a first positioning reference signal PRS, and the second information indicates whether a second resource exists and/or the second information indicates whether a third resource exists. The second resource is used by the communication apparatus to send a second PRS, and the third resource is used by the second device to send a third PRS. The input/output interface 2210 is further configured to output the first PRS to the second device on the first resource, where the first PRS is used for sidelink positioning.

In an optional implementation, the communication apparatus 2200 may be used in the first device to perform the method performed by the first device, specifically, for example, the method performed by the first device in the embodiment shown in FIG. 17.

The input/output interface 2210 is configured to input third information and fourth information from the network device. The third information indicates a fourth resource for sending a first sidelink positioning reference signal SL-PRS by the communication apparatus, and the fourth information indicates a fifth resource and/or the fourth information indicates a sixth resource. The fifth resource is used by the communication apparatus to send a second SL-PRS resource, and the sixth resource is used by a second device to send a third SL-PRS resource. The logic circuit 2220 is configured to determine the fifth resource and/or the sixth resource and the fourth resource based on the third information and the fourth information. The input/output interface 2210 is further configured to: output the second PRS to the second device and/or receive the third PRS and send the first PRS.

In an optional implementation, the communication apparatus 2200 may be used in the first device to perform the method performed by the first device, specifically, for example, the method performed by the first device in the embodiment shown in FIG. 18.

The logic circuit 2220 is configured to determine synchronization information based on a synchronization source of the communication apparatus. The synchronization information indicates a type and/or an identifier of a synchronization source. The type of the synchronization source includes one of the following: a satellite, a network device, or a terminal device. The input/output interface 2210 is configured to output the synchronization information to the second device, where the synchronization information is used by the second device to generate a positioning measurement report.

The communication apparatus 2200 provided in this embodiment may be used in the first device, to complete the method performed by the first device. Therefore, for technical effect that can be achieved by this embodiment, refer to the foregoing method embodiments. Details are not described herein again.

In an optional implementation, the communication apparatus 2200 may be used in the second device to perform the method performed by the terminal device, specifically, for example, the method performed by the second device in the embodiment shown in FIG. 11.

The input/output interface 2210 is configured to input first information and second information from the first device. The first information indicates a first resource for sending a first positioning reference signal PRS, and the second information indicates whether a second resource exists and/or the second information indicates whether a third resource exists. The second resource is used by the first device to send a second PRS, and the third resource is used by the communication apparatus to send a third PRS. The logic circuit 2220 is configured to determine the first resource. The input/output interface 2210 is further configured to input the first PRS from the first device on the first resource, where the first PRS is used for sidelink positioning.

In an optional implementation, the communication apparatus 2200 may be used in the second device to perform the method performed by the terminal device, specifically, for example, the method performed by the second device in the embodiment shown in FIG. 18.

The input/output interface 2210 is configured to input synchronization information from the first device. The synchronization information indicates a type and/or an identifier of a synchronization source. The type of the synchronization source includes one of the following: a satellite, a network device, or a terminal device. The logic circuit 2220 is configured to generate a positioning measurement report based on the synchronization information.

The communication apparatus 2200 provided in this embodiment may be used in the second device, to complete the method performed by the second device. Therefore, for technical effect that can be achieved by this embodiment, refer to the foregoing method embodiments. Details are not described herein again.

In an optional implementation, the communication apparatus 2200 may be used in the third device to perform the method performed by the terminal device, specifically, for example, the method performed by the third device in the embodiment shown in FIG. 16.

The input/output interface 2210 is configured to input, in a sensing window, first information and second information that are sent by the first device. The first information indicates a first resource for sending a first positioning reference signal PRS by the first device, the second information indicates a second resource for sending a second PRS by the first device, and/or the second information indicates a third resource for sending a third PRS by the second device. The logic circuit 2220 is configured to determine a candidate resource based on the second resource and/or the third resource and the first resource.

The communication apparatus 2200 provided in this embodiment may be used in the third device, to complete the method performed by the third device. Therefore, for technical effect that can be achieved by this embodiment, refer to the foregoing method embodiments. Details are not described herein again.

In an optional implementation, the communication apparatus 2200 may be used in the network device to perform the method performed by the network device, specifically, for example, the method performed by the network device in the embodiment shown in FIG. 17.

The logic circuit 2220 is configured to determine third information and fourth information, where the third information indicates a fourth resource for sending a first sidelink positioning reference signal SL-PRS by the first device, and the fourth information indicates a fifth resource and/or the fourth information indicates a sixth resource. The fifth resource is used by the first device to send a second SL-PRS, and the sixth resource is used by the second device to send a third SL-PRS. The input/output interface 2210 is configured to output the third information and the fourth information to the first device.

The communication apparatus 2200 provided in this embodiment may be used in the network device, to complete the method performed by the network device. Therefore, for technical effect that can be achieved by this embodiment, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, such as a USB flash drive, a removable hard disk drive, a read-only memory, a random-access memory, a magnetic disk, or an optical disc.

To implement functions of the communication apparatuses in FIG. 19 to FIG. 22, an embodiment of this application further provides a chip, including a processor, configured to support the communication apparatus in implementing functions of the first device, the second device, the third device, or the network device in the foregoing method embodiments. In a possible design, the chip is connected to a memory, or the chip includes a memory. The memory is configured to store a computer program or instructions and data that are necessary for the communication apparatus.

An embodiment of this application further provides a communication system, including at least one first device and at least one second device. Optionally, at least one third device may be further included. Optionally, at least one network device may be further included.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computerimplemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. In this case, this application is intended to cover these modifications and variations of embodiments of this application provided that they fall within the scope of protection defined by the following claims and their equivalent technologies.

**Claims**

1. An information transmission method, comprising:

    sending, by a first device, first information and second information to a second device, wherein the first information indicates a first resource for sending a first positioning reference signal PRS, the second information indicates whether a second resource exists and/or the second information indicates whether a third resource exists, the second resource is used by the first device to send a second PRS, and the third resource is used by the second device to send a third PRS; and
    sending, by the first device, the first PRS to the second device on the first resource, wherein the first PRS is used for sidelink positioning.

2. The method according to claim 1, further comprising:
    when the second information indicates that the second resource exists, sending, by the first device, the second PRS to the second device on the second resource.

3. The method according to claim 1 or 2, further comprising:
    when the second information indicates that the third resource exists, receiving, by the first device, the third PRS from the second device on the third resource.

4. The method according to any one of claims 1 to 3, wherein the first information and the second information are carried in same signaling.

5. The method according to any one of claims 1 to 4, wherein the second PRS and/or the third PRS are/is located after the first PRS, and the method further comprises:

    using the second PRS and/or the third PRS and the first PRS for same sidelink positioning; or
    using the second PRS and/or the third PRS and the first PRS for generation of a same sidelink positioning measurement report.

6. The method according to any one of claims 1 to 5, wherein the second PRS and/or

    the third PRS and the first PRS are located in a reservation period of the first PRS; and
    the second PRS and/or the third PRS and the first PRS are a plurality of mutually associated sidelink positioning reference signals for completing one sidelink positioning.

7. The method according to any one of claims 1 to 6, wherein the second information comprises request information, and the request information indicates the second device to send the third PRS.

8. The method according to any one of claims 1 to 7, wherein when the second information indicates that the second resource exists, the second information comprises indication information of the second resource; and/or
    when the second information indicates that the third resource exists, the second information comprises indication information of the third resource.

9. The method according to claim 8, wherein the indication information of the second resource comprises a quantity of second resources.

10. The method according to claim 8 or 9, wherein the indication information of the second resource comprises a time domain range of the second resource.

11. The method according to any one of claims 8 to 10, wherein the indication information of the second resource comprises information about a time domain resource of the second resource and/or information about a frequency domain resource of the second resource.

12. The method according to claim 11, wherein the information about the frequency domain resource of the second resource comprises a position of a resource element of the second PRS in frequency domain; and/or
    the information about the frequency domain resource of the second resource comprises an index of a subchannel for transmitting sidelink control information for scheduling the second PRS.

13. The method according to any one of claims 8 to 12, wherein the indication information of the third resource comprises a quantity of third resources.

14. The method according to any one of claims 8 to 13, wherein the indication information of the third resource comprises a time domain range of the third resource.

15. The method according to claim 14, wherein the time domain range of the third resource indicates the second device to determine the third resource in the time domain range.

16. The method according to claim 14 or 15, wherein the indication information of the third resource further comprises one or more of the following information indicating the time domain range:

   a reference slot position;
   a position of an initial transmission resource of the second PRS or the third PRS; and
   duration of the time domain resource range.

17. The method according to any one of claims 8 to 16, wherein the indication information of the third resource comprises information about a time domain resource of the third resource and/or information about a frequency domain resource of the third resource.

18. The method according to claim 17, wherein the information about the frequency

   domain resource of the third resource comprises a position of a resource element of the third PRS in frequency domain; and/or
   the information about the frequency domain resource of the third resource comprises an index of a subchannel for transmitting sidelink control information for scheduling the third PRS.

19. The method according to any one of claims 1 to 18, further comprising:

   sending, by the first device, synchronization information to the second device, wherein the synchronization information indicates a type and/or an identifier of a synchronization source, and the type of the synchronization source comprises one of the following: a satellite, a network device, or a terminal device; and
   the synchronization information is used by the second device to generate a positioning measurement report.

20. The method according to claim 19, further comprising:
   receiving, by the first device, the positioning measurement report from the second device, wherein a type and/or an identifier of a synchronization source of the second device are/is the same as the type and/or the identifier indicated by the synchronization information.

21. An information transmission method, comprising:

   receiving, by a second device, first information and second information from a first device, wherein the first information indicates a first resource for sending a first positioning reference signal PRS, the second information indicates whether a second resource exists and/or the second information indicates whether a third resource exists, the second resource is used by the first device to send a second PRS, and the third resource is used by the second device to send a third PRS; and
   receiving, by the second device, the first PRS from the first device on the first resource, wherein the first PRS is used for sidelink positioning.

22. The method according to claim 21, further comprising:
   when the second information indicates that the second resource exists, receiving, by the second device, the second PRS from the first device on the second resource.

23. The method according to claim 21 or 22, further comprising:
   when the second information indicates that the third resource exists, receiving, by the first device, the third PRS from the second device on the third resource.

24. The method according to any one of claims 21 to 23, wherein the first information and the second information are carried in same signaling.

25. The method according to any one of claims 21 to 24, wherein the second PRS and/or the third PRS are/is located after the first PRS, and the method further comprises:

   using the second PRS and/or the third PRS and the first PRS for same sidelink positioning; or
   using the second PRS and/or the third PRS and the first PRS for generation of a same sidelink positioning measurement report.

26. The method according to any one of claims 21 to 25, wherein the second PRS and/or the third PRS and the first PRS are located in a reservation period of the first PRS; and
   the second PRS and/or the third PRS and the first PRS are a plurality of mutually associated sidelink positioning reference signals for completing one sidelink positioning.

27. The method according to any one of claims 21 to 26, wherein the second information comprises request information, and the request information indicates the second device to send the third PRS.

28. The method according to any one of claims 21 to 27, wherein when the second information indicates that the second resource exists, the second information comprises indication information of the second resource; and/or when the second information indicates that the third resource exists, the second information comprises indication information of the third resource.

29. The method according to claim 28, wherein the indication information of the second resource comprises a quantity of second resources.

30. The method according to claim 28 or 29, wherein the indication information of the second resource comprises a time domain range of the second resource.

31. The method according to any one of claims 28 to 30, wherein the indication information of the second resource comprises information about a time domain resource occupied in the second resource and/or information about a frequency domain resource of the second resource.

32. The method according to claim 31, wherein the information about the frequency domain resource of the second resource comprises a position of a resource element of the second PRS in frequency domain; and/or
   the information about the frequency domain resource of the second resource comprises an index of a subchannel for transmitting sidelink control information for scheduling the second PRS.

33. The method according to any one of claims 28 to 32, wherein the indication information of the third resource comprises a quantity of third resources.

34. The method according to any one of claims 28 to 33, wherein the indication information of the third resource comprises a time domain range of the third resource.

35. The method according to claim 34, wherein the method further comprises:
   determining, by the second device, the third resource in the time domain resource range of the third resource.

36. The method according to claim 34 or 35, further comprising:
   determining, by the second device, the third resource in the time domain range of the third resource based on a priority of a PRS and/or the reservation period of the first PRS, wherein the priority of the PRS is a priority of the first PRS, a priority of the second PRS, or a priority of the third PRS.

37. The method according to any one of claims 34 to 36, wherein the indication
   information of the third resource further comprises one or more of the following information indicating the time domain range:

   a reference slot position;
   a position of an initial transmission resource of the second PRS or the third PRS; and
   duration of the time domain resource range.

38. The method according to any one of claims 28 to 37, wherein the indication information of the third resource comprises information about a time domain resource of the third resource and/or information about a frequency domain resource of the third resource.

39. The method according to claim 38, wherein the information about the frequency domain resource of the third resource comprises a position of a resource element of the third PRS in frequency domain; and/or
the information about the frequency domain resource of the third resource comprises an index of a subchannel for transmitting sidelink control information for scheduling the third PRS.

40. The method according to any one of claims 21 to 39, further comprising:

receiving, by the second device, synchronization information from the first device, wherein the synchronization information indicates a type and/or an identifier of a synchronization source, and the type of the synchronization source comprises one of the following: a satellite, a network device, or a terminal device; and
generating, by the second device, a positioning measurement report based on the synchronization information.

41. The method according to claim 40, wherein the generating, by the second device, a positioning measurement report based on the synchronization information comprises:

when a type and/or an identifier of a synchronization source of the second device are/is the same as the type and/or the identifier of the synchronization source indicated by the synchronization information, measuring, by the second device, the first PRS; and
generating, by the second device, the positioning measurement report based on a measurement result of the first PRS obtained by measuring the first PRS.

42. The method according to claim 41, further comprising:
sending, by the second device, the positioning measurement report to the first device.

43. The method according to claim 41 or 42, further comprising:
determining, by the second device, a candidate resource based on the second resource and/or the third resource and the first resource.

44. The method according to claim 43, wherein the determining, by the second device, a candidate resource based on the second resource and/or the third resource and the first resource comprises:
when a signal strength of the first PRS is higher than a first threshold, excluding, by the second device, the second resource and/or the third resource and the first resource in a selection window, wherein the selection window is after sensing window.

45. The method according to claim 43 or 44, wherein when the second information indicates that the second resource exists, the candidate resource is a resource excluding the second resource and a reserved resource corresponding to the first resource in the selection window; or

when the second information indicates the third resource, excluding, by a third device, the third resource and the first resource in the selection window; or
when the second information indicates the second resource and the third resource, excluding, by the third device, the second resource, the third resource, and the first resource in the selection window.

46. An information transmission method, comprising:

determining, by a first device, synchronization information based on a synchronization source of the first device, wherein the synchronization information indicates a type and/or an identifier of the synchronization source, and the type of the synchronization source comprises one of the following: a satellite, a network device, or a terminal device; and
sending, by the first device, the synchronization information to a second device, wherein the synchronization information is used by the second device to generate a positioning measurement report.

47. The method according to claim 46, further comprising:
receiving, by the first device, the positioning measurement report from the second device, wherein a type and/or an identifier of a synchronization source of the second device are/is the same as the type and/or the identifier of the synchronization source of the first device.

48. The method according to claim 47, wherein the positioning measurement report comprises at least one of the following information: the synchronization information, an identifier or a source identifier of the first device, an identifier or a destination identifier of the second device, an identifier of a positioning reference signal resource, a subframe number in which the positioning reference signal resource is located, a slot number in which the positioning reference signal resource is located, an index of a resource pool in which the positioning reference signal resource is located, indication information of a positioning measurement result, indication information of a timestamp, or indication information of the type and/or the identifier of the synchronization source.

49. The method according to claim 46 or 47, wherein the synchronization information further comprises hop count indication information, and the hop count indication information indicates a hop count during synchronization to the synchronization source.

50. The method according to any one of claims 46 to 49, wherein the type of the synchronization source comprises a network device, and the synchronization information further comprises an operator identifier of the network device.

51. The method according to any one of claims 46 to 49, wherein the type of the synchronization source comprises a network device, and the synchronization information further comprises an identifier of a physical cell managed by the network device.

52. The method according to any one of claims 46 to 51, wherein the synchronization information indicates information about the synchronization source of the first device, or the synchronization information indicates information about the synchronization source of the second device, or the synchronization information indicates information about a required synchronization source.

53. The method according to any one of claims 46 to 52, wherein the synchronization information is carried in sidelink control information, a media access control control element, or short-range direct communication interface PC5 radio resource control.

54. The method according to any one of claims 46 to 52, wherein the synchronization information is carried in any one of the following messages: a positioning request message, a positioning assistance message, a positioning response message, or the positioning measurement report.

55. An information transmission method, comprising:

receiving, by a second device, synchronization information from a first device, wherein the synchronization information indicates a type and/or an identifier of a synchronization source, and the type of the synchronization source comprises one of the following: a satellite, a network device, or a terminal device; and
generating, by the second device, a positioning measurement report based on the synchronization information.

56. The method according to claim 55, wherein when a type and/or an identifier of a synchronization source of the second device are/is the same as the type and/or the identifier of the synchronization source indicated by the synchronization information, measuring, by the second device, a positioning reference signal of the first device; and
the generating, by the second device, a positioning measurement report based on the synchronization information comprises:
generating, by the second device, the positioning measurement report based on a measurement result obtained by measuring the positioning reference signal.

57. The method according to claim 55 or 56, further comprising:
sending, by the second device, the positioning measurement report to the first device.

58. The method according to any one of claims 55 to 57, wherein the positioning measurement report comprises at least one of the following information: the synchronization information, an identifier or a source identifier of the first device, an identifier or a destination identifier of the second device, an identifier of a positioning reference signal resource, a subframe number in which the positioning reference signal resource is located, a slot number in which the positioning reference signal resource is located, an index of a resource pool in which the positioning reference signal resource is located, indication information of a positioning measurement result, indication information of a timestamp, and indication information of the type and/or the identifier of the synchronization source.

59. The method according to any one of claims 55 to 58, wherein the synchronization information further comprises hop count indication information, and the hop count indication information indicates a hop count during synchronization to the synchronization source.

60. The method according to any one of claims 55 to 59, wherein the type of the synchronization source comprises a network device, and the synchronization information further comprises an operator identifier of the network device.

61. The method according to any one of claims 55 to 59, wherein the type of the synchronization source comprises a network device, and the synchronization information further comprises an identifier of a physical cell managed by the network device.

62. The method according to any one of claims 55 to 61, wherein the synchronization information indicates information about a synchronization source of the first device, or the synchronization information indicates information about the synchronization source of the second device, or the synchronization information indicates information about a required synchronization source.

63. The method according to any one of claims 55 to 62, wherein the synchronization information is carried in sidelink control information, a media access control control element, or short-range direct communication interface PC5 radio resource control.

64. The method according to any one of claims 55 to 62, wherein the synchronization information is carried in any one of the following messages: a positioning request message, a positioning assistance message, a positioning response message, or a positioning measurement report.

65. A communication apparatus, comprising a module configured to perform the method according to any one of claims 1 to 20, or comprising a module configured to perform the method according to any one of claims 46 to 54.

66. A communication apparatus, comprising a module configured to perform the method according to any one of claims 21 to 45, or comprising a module configured to perform the method according to any one of claims 55 to 64.

67. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 20 by using a logic circuit or executing code instructions, or the processor is configured to implement the method according to any one of claims 21 to 45 by using a logic circuit or executing code instructions, or the processor is configured to implement the method according to any one of claims 46 to 54 by using a logic circuit or executing code instructions, or the processor is configured to implement the method according to any one of claims 55 to 64 by using a logic circuit or executing code instructions.

68. A computer-readable storage medium, wherein the storage medium stores instructions, and when the instructions are executed by a communication apparatus, the method according to any one of claims 1 to 20 is implemented, or the method according to any one of claims 21 to 45 is implemented, or the method according to any one of claims 46 to 54 is implemented, or the method according to any one of claims 55 to 64 is implemented.

69. A communication apparatus, comprising a processor, wherein the processor is coupled to a memory, the memory is configured to store instructions, and when the instructions are executed by the processor, the communication apparatus is enabled to perform the method according to any one of claims 1 to 20, or the communication apparatus is enabled to perform the method according to any one of claims 21 to 45, or the communication apparatus is enabled to perform the method according to any one of claims 46 to 54, or the communication apparatus is enabled to perform the method according to any one of claims 55 to 64.

70. A computer program product, wherein when the computer program product runs on a computer, the computer is enabled to perform the method according to any one of claims 1 to 20, or the computer is enabled to perform the method according to any one of claims 21 to 45, or the computer is enabled to perform the method according to any one of claims 46 to 54, or the computer is enabled to perform the method according to any one of claims 55 to 64.

71. A communication system, comprising at least one first device configured to perform the method according to any one of claims 1 to 20 and at least one second device configured to perform the method according to any one of claims 21 to 45, or comprising at least one first device configured to perform the method according to any one of claims 46 to 54 and at least one second device configured to perform the method according to any one of claims 55 to 64.

[FIG. 1]

[FIG. 2]

Send 1 (tround)          Reply 2 (treply)

UE 1 ——————————————————————————————————————

PRS 1          PRS 2          PRS 3

UE 2 ——————————————————————————————————————

Reply 1 (treply)          Send 2 (tround)

[FIG. 3]

Send 1 (tround)          Send 2 (tround)

UE 1 ——————————————————————————————————————

PRS 1          PRS 2          PRS 3

UE 2 ——————————————————————————————————————

Reply 1          Reply 2
(treply)         (treply)

[FIG. 4]

Send 1 (tround)          Reply 2 (treply)

UE 1 ────────────────────────────────────────────────

PRS 1          PRS 2          PRS 3

UE 2 ────────────────────────────────────────────────

Reply 1 (treply)          Send 2 (tround)

[FIG. 5]

A-UE 3

T-UE

A-UE 1          A-UE 2

[FIG. 6]

[FIG. 7]

701          702

[FIG. 8]

[FIG. 9]

[FIG. 10]

Reservation period     Reservation period     Reservation period

[FIG. 11]

First device        Second device

S1101: First information and second information

S1102: First PRS

S1103: Second PRS

S1104: Third PRS

[FIG. 12]

First device

First PRS

Second PRS

Third PRS

Second device

[FIG. 13]

(a)　　　　　　(b)　　　　　　(c)　　　　　　(d)

(e)　　　　　　(f)　　　　　　(g)

(h)　　　　　　(i)　　　　　　(j)

[FIG. 14A]

Sensing window

Selection window

SCI   SCI   ...   SCI

Resource   Resource   Resource

[FIG. 14B]

Sensing window                                    Selection window

SCI                          Resource          Reserved

EP 4 583 447 A1

[FIG. 15A]

Selection window

First resource

Reserved resource

Second resource

Reserved resource

Sensing window

[FIG. 15B]

Selection window

First resource

Reserved resource

Third resource

Reserved resource

EP 4 583 447 A1

[FIG. 15C]

EP 4 583 447 A1

[FIG. 16]

First device

Third device

S1601: First information
and second information

S1602: Determine a candidate resource based on a second
resource and/or a third resource and a first resource

[FIG. 17]

Network
device

First device

Second
device

S1701: Determine third
information and fourth
information

S1702: Third information
and fourth information

S1703: First
information
and second
information

[FIG. 18]

```
┌─────────────────┐                          ┌─────────────────┐
│   First device  │                          │  Second device  │
└─────────────────┘                          └─────────────────┘
         │                                            │
┌────────────────────────────────────────────┐       │
│ S1801: Determine synchronization information │       │
│  based on a synchronization source of the    │       │
│              first device                    │       │
└────────────────────────────────────────────┘       │
         │                                            │
         │     S1802: Synchronization                 │
         ├──────────── information ──────────────────►│
         │                                            │
```

[FIG. 19]

```
┌───────────────────────────────────────────┐
│      Communication apparatus 1900          │
│                                            │
│       ┌─────────────────────────┐          │
│       │  Processing unit 1910   │          │
│       └─────────────────────────┘          │
│                    │                        │
│       ┌─────────────────────────┐          │
│       │  Transceiver unit 1920  │          │
│       └─────────────────────────┘          │
│                                            │
└───────────────────────────────────────────┘
```

[FIG. 20]

```
┌──────────────────────────────────────────────────────────┐
│           Communication apparatus 2000                    │
│                                                           │
│   ┌───────────────────┐     ┌ ─ ─ ─ ─ ─ ─ ─ ─ ─ ┐        │
│   │  Processor 2010   │◄----►   Memory 2020       │        │
│   └───────────────────┘     └ ─ ─ ─ ─ ─ ─ ─ ─ ─ ┘        │
│                                                           │
└──────────────────────────────────────────────────────────┘
```

[FIG. 21]

[FIG. 22]

## INTERNATIONAL SEARCH REPORT

International application No.

**PCT/CN2023/118645**

| A. | CLASSIFICATION OF SUBJECT MATTER |
|---|---|
| | H04L5/00(2006.01)i; H04W64/00(2009.01)i |

According to International Patent Classification (IPC) or to both national classification and IPC

| B. | FIELDS SEARCHED |
|---|---|

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNTXT, WPABS, ENTXTC, DWPI, VEN, 3GPP: 侧行链路, 侧链路, 指示, 定位参考信号, 资源, 测量, 定位, 同步, 源, 类型, PRS, sidelink, resource?, indicat+, position, synchronization, source, type, measurement

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114257355 A (SPREADTRUM COMMUNICATIONS (SHANGHAI) CO., LTD.) 29 March 2022 (2022-03-29) description, paragraphs [0006]-[0029] and [0041]-[0081] | 1-18, 21-39, 65-71 |
| Y | CN 114257355 A (SPREADTRUM COMMUNICATIONS (SHANGHAI) CO., LTD.) 29 March 2022 (2022-03-29) description, paragraphs [0006]-[0029] and [0041]-[0081] | 19-20, 40-45 |
| X | CN 111757458 A (HUAWEI TECHNOLOGIES CO., LTD.) 09 October 2020 (2020-10-09) description, paragraphs [0005]-[0047], [0066]-[0094], and [0442]-[0445] | 46-71 |
| Y | CN 111757458 A (HUAWEI TECHNOLOGIES CO., LTD.) 09 October 2020 (2020-10-09) description, paragraphs [0005]-[0047], [0066]-[0094], and [0442]-[0445] | 19-20, 40-45 |
| X | CN 113556668 A (BEIJING UNISOC COMMUNICATION TECHNOLOGY CO., LTD.) 26 October 2021 (2021-10-26) description, paragraphs [0005]-[0024] and [0042]-[0065], and claims 1-19 | 1-18, 21-39, 65-71 |
| Y | CN 113556668 A (BEIJING UNISOC COMMUNICATION TECHNOLOGY CO., LTD.) 26 October 2021 (2021-10-26) description, paragraphs [0005]-[0024] and [0042]-[0065], and claims 1-19 | 19-20, 40-45 |

☑ Further documents are listed in the continuation of Box C. ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 November 2023** | **11 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/118645** |

**C. DOCUMENTS CONSIDERED TO BE RELEVANT**

| Category* | Citation of document, with indication, where appropriate, of the relevant passages | Relevant to claim No. |
|---|---|---|
| X | WO 2022077248 A1 (BEIJING XIAOMI MOBILE SOFTWARE CO., LTD.) 21 April 2022 (2022-04-21)<br>description, page 1, paragraph 2 to page 3, paragraph 1, and page 5, paragraph 2 to page 9, 4th-to-last paragraph | 1-18, 21-39, 65-71 |
| Y | WO 2022077248 A1 (BEIJING XIAOMI MOBILE SOFTWARE CO., LTD.) 21 April 2022 (2022-04-21)<br>description, page 1, paragraph 2 to page 3, paragraph 1, and page 5, paragraph 2 to page 9, 4th-to-last paragraph | 19-20, 40-45 |
| A | CN 110972106 A (HUAWEI TECHNOLOGIES CO., LTD.) 07 April 2020 (2020-04-07)<br>entire document | 1-71 |

Form PCT/ISA/210 (second sheet) (July 2022)

## INTERNATIONAL SEARCH REPORT
**Information on patent family members**

International application No.

**PCT/CN2023/118645**

| Patent document cited in search report | | | Publication date (day/month/year) | Patent family member(s) | | | Publication date (day/month/year) |
|---|---|---|---|---|---|---|---|
| CN | 114257355 | A | 29 March 2022 | WO | 2022062891 | A1 | 31 March 2022 |
| CN | 111757458 | A | 09 October 2020 | WO | 2020200002 | A1 | 08 October 2020 |
| CN | 113556668 | A | 26 October 2021 | WO | 2021208856 | A1 | 21 October 2021 |
| WO | 2022077248 | A1 | 21 April 2022 | EP | 4231770 | A1 | 23 August 2023 |
| | | | | KR | 20230086725 | A | 15 June 2023 |
| | | | | CN | 114762447 | A | 15 July 2022 |
| CN | 110972106 | A | 07 April 2020 | WO | 2020063459 | A1 | 02 April 2020 |

Form PCT/ISA/210 (patent family annex) (July 2022)

**EP 4 583 447 A1**

**Patent documents cited in the description**

- CN 202211160367
- CN 202211216478